(19) Europäisches Patentamt / European Patent Office / Office européen des brevets

(11) **EP 3 646 554 B1**

(12) **FASCICULE DE BREVET EUROPEEN**

(45) Date de publication et mention de la délivrance du brevet:
**15.12.2021 Bulletin 2021/50**

(21) Numéro de dépôt: **18737656.1**

(22) Date de dépôt: **18.05.2018**

(51) Int Cl.:
*H04L 29/06* *(2006.01)*     *H04W 68/00* *(2009.01)*

(86) Numéro de dépôt international:
**PCT/FR2018/051212**

(87) Numéro de publication internationale:
**WO 2019/002707 (03.01.2019 Gazette 2019/01)**

(54) **PROCÉDÉ DE TRAITEMENT D'UNE REQUÊTE ET SERVEUR D'UN COEUR DE RÉSEAU IP MULTIMÉDIA**

VERFAHREN ZUR VERARBEITUNG EINER ANFORDERUNG UND SERVER EINES MULTIMEDIA-IP-NETZWERKKERNS

METHOD FOR PROCESSING A REQUEST AND SERVER OF A MULTIMEDIA IP NETWORK CORE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.06.2017 FR 1756094**

(43) Date de publication de la demande:
**06.05.2020 Bulletin 2020/19**

(73) Titulaire: **ORANGE**
**92130 Issy-les-Moulineaux (FR)**

(72) Inventeur: **BOUVET, Bertrand**
**92326 Châtillon Cedex (FR)**

(74) Mandataire: **Cabinet Beau de Loménie**
**158, rue de l'Université**
**75340 Paris Cedex 07 (FR)**

(56) Documents cités:
**US-A1- 2012 166 652**     **US-A1- 2016 156 783**

- **VIDAL I ET AL: "IMS signalling for multiparty services based on network level multicast", NEXT GENERATION INTERNET NETWORKS, 3RD EURONGI CONFERENCE ON, IEEE, PI, 1 mai 2007 (2007-05-01), pages 103-110, XP031176434, DOI: 10.1109/NGI.2007.371204 ISBN: 978-1-4244-0856-6**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

Arrière-plan de l'invention

L'invention se rapporte au domaine général des télécommunications.

Elle concerne plus particulièrement les cœurs de réseaux IP multimédia.

L'invention a une application privilégiée mais non limitative dans le contexte des cœurs de réseau IP multimédia mettant en œuvre le protocole d'initiation de session SIP (Session Initiation Protocol) défini par le standard IETF (Internet Engineering Task Force) et décrit dans le document RFC 3261 intitulé « SIP: Session Initiation Protocol », Juin 2002, édité par l'IETF. Elle s'applique notamment aux cœurs de réseau IP multimédia s'appuyant sur une architecture IMS (IP Multimedia Subsystem) telle que proposée par le standard 3GPP (Third Generation Partnership Project).

Le document US 2016/0156783 A1 décrit par exemple un système de bifurcation d'appels entrants vers un dispositif de destination oú un dispositif qui est associé au dispositif de destination est divulgué. Le système reçoit une demande d'enregistrement de plusieurs appareils pour les services IMS, reçoit un appel entrant vers un appareil mobile de destination, identifie un ou plusieurs appareils mobiles associés et détermine un ou plusieurs appareils bifurqués.

Toutefois, l'invention peut également être utilisée en association avec d'autres architectures de cœurs de réseau IP multimédia, telles que par exemple des architectures propriétaires, mettant en œuvre ou non le protocole SIP pour l'établissement de sessions multimédia (voix, texte, vidéo, données, etc.), ou des architectures basées sur le standard web de communication en temps réel WebRTC (Web Real Time Communication).

Les cœurs de réseau IP multimédia, et notamment les cœurs de réseaux IMS, sont prévus pour supporter de multiples services de communication, comme par exemple des services de téléphonie (ex. voix sur IP ou VoIP pour « Voice over IP »), de télévision et vidéo à la demande, de communication enrichie (aussi appelés RCS pour Rich Communication Suite). Ces multiples services de communication s'appuient avantageusement sur l'utilisation d'une même identité publique allouée au client, qui est typiquement le numéro MSISDN (Mobile Station Integrated Services Digital Network) pour un réseau mobile et le numéro de téléphone fixe pour un réseau fixe. Cette identité publique peut être partagée par plusieurs terminaux ou plus généralement dispositifs de communication distincts du client.

Pour gérer ces multiples services de communication, un cœur de réseau IMS implémente une pluralité de fonctions, intégrées au sein d'un ou de plusieurs équipements du réseau, et comprenant notamment :

— une fonction ou serveur de gestion d'abonnés ou HSS (pour Home Service Subscriber), qui contient la liste des clients du cœur de réseau ainsi que leur profil ;

— une fonction ou serveur P-CSCF (Proxy Call State Control Function), qui joue le rôle de point d'entrée sur le cœur de réseau des terminaux des clients ;

— une fonction ou serveur S-CSCF (Session Call State Control Function), en charge de l'enregistrement des terminaux et du routage des messages SIP entrants émis par ces terminaux ou des messages SIP sortants destinés à ces terminaux ;

— une fonction ou serveur I-CSCF (Interrogating Call Control Function), apte à déterminer pour chaque terminal enregistré auprès du cœur de réseau l'adresse du serveur S-CSCF gérant ce terminal ;

— un ou plusieurs serveurs d'application AS (Application Server) en charge du traitement des différents services proposés par le cœur de réseau ; et

— des équipements d'interconnexion avec d'autres (cœurs de) réseaux.

Le routage, via ces différentes fonctions, des communications relatives aux multiples services proposés par un cœur de réseau IMS est normalisé et défini dans le document 3GPP 24.229. Il se déroule de la façon suivante.

Un terminal émetteur ou appelant s'enregistre auprès de son cœur de réseau IMS (désigné dans la suite par cœur de réseau appelant) et émet une requête SIP à destination d'une identité publique d'un terminal récepteur ou appelé, contenue dans un champ SIP Request URI (Uniform Resource Identifier) de la requête. La requête SIP est présentée au serveur S-CSCF du cœur de réseau appelant gérant l'utilisateur du terminal émetteur.

Le serveur S-CSCF extrait le contenu du champ Request URI de la requête, et le normalise selon le format E164 International ; par exemple, si le contenu de la Request URI est un numéro de téléphone mobile 0686166924, le format E164 correspondant est composé du préfixe +33 suivi du numéro de téléphone mobile sans le « 0 », soit +33686166924. Le format E164 est ensuite inversé et transformé en un nom de domaine (dans l'exemple du numéro de téléphone mobile précédent, ce nom de domaine est 4.2.9.6.6.1.6.8.6.3.3.arpa.net). Puis le serveur S-CSCF interroge un serveur DNS (Domain Name Server) géré par le cœur de réseau appelant implémentant par exemple le mécanisme ENUM.

Si le serveur DNS ENUM interrogé contient un identifiant SIP ou URI SIP (pour Uniform Resource Identifier) correspondant au nom de domaine qui lui a été fourni par le serveur S-CSCF (par exemple, URI SIP = +3368166924@ims.mnc001.mcc208.3gppnetwork.org), il retourne cet identifiant SIP au serveur S-CSCF. Cela signifie que le terminal appelé appartient au même domaine IMS que le terminal appelant, autrement dit, est rattaché au même cœur de réseau IMS (i.e. cœur de réseau appelé identique au cœur de réseau appelant).

Dans ce cas, le serveur S-CSCF route la requête SIP vers le serveur I-CSCF (qui peut être co-localisé avec le serveur S-CSCF), après avoir modifié préalablement son champ Request URI pour y insérer l'identifiant SIP qui lui a été envoyé par le serveur DNS. Le serveur I-CSCF interroge le serveur de gestion d'abonnés HSS du cœur de réseau appelant en utilisant l'identifiant SIP contenu dans le champ Request URI, et obtient en réponse l'adresse du serveur S-CSCF gérant le terminal appelé (qui peut être ou non le même que le serveur S-CSCF gérant le terminal appelant). Le serveur I-CSCF route ensuite la requête SIP vers le serveur S-CSCF gérant le terminal appelé.

Deux cas de figure se présentent alors :

— soit un unique terminal est enregistré auprès du cœur de réseau appelant avec l'identité publique : la requête SIP est alors transmise à cet unique terminal, qui y répond. La réponse SIP est retournée au terminal appelant via le chemin inverse de celui emprunté par la requête ;
— soit l'identité publique est partagée au sein du cœur de réseau appelant par plusieurs terminaux (i.e. plusieurs adresses de contact associées respectivement à plusieurs terminaux sont enregistrées au niveau du serveur S-CSCF pour l'identité publique) : le serveur S-CSCF ou un serveur d'application du cœur de réseau appelant, via une fonction de réplication (ou « forking » en anglais), réplique la requête SIP en autant de requêtes que de terminaux enregistrés et transmet vers les terminaux enregistrés les répliques de la requête SIP. Il reçoit une ou plusieurs réponses en retour et élabore une ou plusieurs réponses à partir des réponses reçues qu'il transmet à destination du terminal appelant. La ou les réponses SIP sont retournées au terminal appelant via le chemin inverse de celui emprunté par la requête.

Si au contraire le serveur DNS interrogé par le serveur S-CSCF du terminal appelant ne contient pas d'identifiant SIP correspondant au nom de domaine qui lui a été fourni, cela signifie que le terminal appelé n'appartient pas au même domaine IMS que le terminal appelant, autrement dit, il n'est pas rattaché au même cœur de réseau (i.e. cœur de réseau appelé distinct du cœur de réseau appelant).

Dans ce cas, le serveur S-CSCF route la requête SIP vers une fonction interne appelée BGCF (Breakout Gateway Control Function) qui applique un routage défini par défaut à la requête SIP vers le cœur de réseau appelé. Ce routage par défaut s'appuie sur une route sélectionnée parmi un ensemble de routes préconfigurées, en fonction par exemple du préfixe de l'identité publique incluse dans la requête et/ou d'un préfixe de portabilité de numéro et/ou d'un préfixe dit de routage technique (ou RN pour Routable Number).

Ainsi, à titre d'exemple, s'il existe des accords d'interconnexion en voix sur IP entre l'opérateur du cœur de réseau appelant et l'opérateur du cœur de réseau appelé (ex. les deux cœurs de réseau implémentent une architecture IMS et utilisent le protocole SIP) ou si les routes préconfigurées prévoient l'envoi de la requête vers un hub utilisant le protocole SIP, alors la fonction BGCF route la requête SIP vers un serveur d'interconnexion IBCF (Interconnect Border Control Function) du cœur de réseau appelant assurant l'interconnexion avec le cœur de réseau appelé. Le flux média est quant à lui routé vers un serveur d'interconnexion IBGF (Interconnect Border Gateway Function).

Selon un autre exemple, s'il existe des accords d'interconnexion en mode circuit et utilisant le protocole ISUP (ISDN Signalling User Part) entre l'opérateur du cœur de réseau (IMS) appelant et l'opérateur du cœur de réseau (circuit) appelé ou si les routes préconfigurées prévoient l'envoi de la requête vers un hub fonctionnant en mode circuit et utilisant le protocole ISUP, alors la fonction BGCF route la requête SIP vers un serveur d'interconnexion MGCF (Media Gateway Control Function) du cœur de réseau appelant assurant une fonction de passerelle protocolaire entre le protocole SIP utilisé par le cœur de réseau IMS appelant et le protocole ISUP utilisé par le cœur de réseau circuit appelé pour l'interconnexion entre les deux cœurs de réseau. Le flux média est quant à lui routé vers un serveur d'interconnexion MGW (Media GateWay) assurant une fonction de passerelle entre le protocole RTP (Real Time Protocol) et le mode circuit.

L'architecture IMS, et les mécanismes qui ont été normalisés pour cette architecture dont notamment le mécanisme de routage rappelé ci-dessus, ont été initialement conçus dans l'idée de porter tous les services de communication auxquels est susceptible de souscrire un même client au sein d'un même cœur de réseau IMS, ce client pouvant utiliser, pour bénéficier de ces services, un ou de plusieurs dispositifs de communication partageant son identité publique.

Or la multiplicité et la diversité des services de communication proposés aujourd'hui (ex. voix sur IP, voix sur LTE (VoLTE) ou sur WiFi (VoWiFi), services RCS (Rich Communication Suite) de messagerie, de partage de vidéo, etc.) par qui plus est, une pluralité de fournisseurs de service, font qu'il est difficile voire inconcevable à court terme pour les opérateurs de télécommunications de déployer des cœurs de réseau supportant simultanément tous ces services. On s'oriente donc vers le déploiement de plusieurs cœurs de réseau « concurrents », supportant potentiellement chacun des services différents et complémentaires, et qui nécessitent l'installation au niveau des terminaux d'autant de piles de protocoles IMS distinctes, chaque pile de protocole IMS étant paramétrée pour communiquer sur un domaine IMS différent (et donc avec un cœur de réseau IMS différent).

Ainsi, un cœur de réseau IMS A géré par un opérateur OPA sera en mesure de supporter et de proposer à un client des services de type VoLTE ou VoWiFi, tandis qu'un autre cœur de réseau IMS B géré par un opérateur OPB pourra supporter et proposer à ce même client des services de type RCS. Si le client veut pouvoir accéder à la fois à des services de type VoLTE ou VoWiFi et à des services de type RCS avec un même dispositif de communication, celui-ci devra être équipé de deux piles de protocoles IMS distinctes lui permettant de s'enregistrer et de communiquer respectivement sur les cœurs de réseau A et B.

L'enregistrement des deux piles IMS distinctes du dispositif de communication auprès des deux cœurs de réseau A et B basé sur une identité publique allouée au client ne pose pas en soi de difficulté avec le protocole SIP (même si un regain de la consommation de la batterie du dispositif de communication peut être à déplorer). En revanche, des problèmes peuvent se poser dans ce contexte « bi-cœur IMS » quant au routage des communications, en raison notamment du mécanisme de routage standardisé rappelé ci-dessus et de la possibilité offerte par l'architecture IMS à un client de pouvoir en outre disposer de plusieurs terminaux partageant son identité publique au sein d'un même cœur de réseau IMS.

De tels problèmes apparaissent notamment dans le cadre de communications vidéo. En effet, plusieurs services vidéo sont aujourd'hui proposés et destinés à inter-fonctionner : vidéo sur LTE (ViLTE) ou sur WiFi (ViWiFi), service RCS de partage de vidéo, service RCS d'appel Vidéo IP, service WebRTC d'appel vidéo, etc.

Considérons à titre illustratif dans ce contexte de services vidéo, un utilisateur UA disposant d'un terminal UEA équipé d'une première pile de protocole IMS permettant d'accéder à des services de ViLTE et ViWiFI et enregistré sur le cœur de réseau A de l'opérateur OPA en utilisant une identité publique IMPUA allouée à l'utilisateur UA. Ce même terminal UEA est par ailleurs équipé d'une deuxième pile de protocole IMS permettant d'accéder à des services vidéo RCS proposés par le cœur de réseau B mais qui est temporairement désactivée (en raison par exemple de problème d'accès au cœur de réseau B). Bien que le terminal UEA soit connu du cœur de réseau B, il n'est pas enregistré auprès de celui-ci en raison de cette désactivation temporaire de sa deuxième pile IMS.

On considère en outre un terminal UEB d'un utilisateur UB, équipé d'une pile de protocole IMS permettant d'accéder aux services vidéo RCS proposés par l'opérateur OPB, et enregistré auprès du cœur de réseau B de l'opérateur OPB en utilisant l'identité publique IMPUB de l'utilisateur UB.

Lorsque l'utilisateur UB compose l'identité publique IMPUA de l'utilisateur UA pour établir une communication vidéo RCS avec celui-ci, un message SIP OPTIONS est transmis par le terminal UEB à destination de l'identité publique IMPUA de sorte à détecter les capacités de communication du ou des terminaux de l'utilisateur UA utilisant cette identité publique.

Conformément au mécanisme de routage normalisé rappelé précédemment, lorsque le message SIP OPTIONS arrive au serveur S-CSCF du cœur de réseau B gérant l'utilisateur UEB, comme l'identité publique IMPUA est connue du cœur de réseau B, le message SIP OPTIONS devrait être routé au sein du cœur de réseau B et plus particulièrement vers un serveur S-CSCF du cœur de réseau B gérant l'identité publique IMPUA.

Or, comme le terminal UEA n'est pas enregistré auprès du cœur de réseau B, le serveur S-CSCF du cœur de réseau B est dans l'incapacité de lui transmettre le message SIP OPTIONS et répond à celui-ci par un message SIP 480 Temporarily Unavailable. L'utilisateur UB n'est donc pas en mesure d'établir un service de communication vidéo avec l'utilisateur UA. Il en résulte une mauvaise expérience client pour l'utilisateur UB.

Selon un deuxième exemple illustratif, considérons maintenant un utilisateur UC disposant de deux terminaux UEC1 et UEC2. Le terminal UEC1 est équipé d'une pile IMS supportant les services ViLTE/ViWiFI et enregistré avec l'identité publique IMPUC de l'utilisateur UC auprès du cœur de réseau A de l'opérateur OPA. Le terminal UEC2 dispose d'une pile IMS supportant les services vidéo RCS et est enregistré avec l'identité publique IMPUC auprès du cœur de réseau B de l'opérateur OPB.

Un autre utilisateur UD dispose d'un unique terminal UED équipé d'une pile IMS supportant les services vidéo RCS et enregistré auprès du cœur de réseau B de l'opérateur OPB.

Conformément au mécanisme de routage normalisé précité, si le terminal UED envoie via son cœur de réseau B un message SIP OPTIONS de découverte des capacités de communication des terminaux utilisant l'identité publique IMPUC de l'utilisateur UC, seules les capacités du terminal UEC2 lui seront retournées puisque seul le terminal UEC2 est connu et enregistré auprès du cœur de réseau B. De façon similaire, si le terminal UED envoie un message SIP INVITE d'établissement d'une session visiophonique vers l'identité publique IMPUC, seul le terminal UEC2 de l'utilisateur UC recevra ce message et sonnera pour notifier l'utilisateur UC. L'utilisateur UC n'est donc pas en mesure d'exploiter les capacités de visiophonie le cas échéant de son autre terminal UEC1.

Il convient de noter que les problèmes identifiés ci-dessus, bien qu'ayant été décrits dans un contexte de terminaux IMS, peuvent également se présenter lorsque l'utilisateur appelé dispose en plus d'un ou de plusieurs terminaux IMS, d'autres terminaux utilisant la même identité publique communiquant par exemple via des infrastructures de cœurs de réseau en mode circuit.

En outre, des problèmes similaires se posent pour d'autres architectures de cœurs de réseau IP multimédia que des architectures IMS, typiquement pour des architectures basées sur le standard WebRTC.

Objet et résumé de l'invention

L'invention propose un mécanisme permettant de remédier notamment aux problèmes précités. Plus particulièrement, elle propose un procédé de traitement d'une requête émise par un premier dispositif enregistré auprès d'un premier cœur de réseau IP multimédia à destination d'une identité publique allouée à au moins un deuxième dispositif et connue du premier cœur de réseau IP multimédia, ledit procédé étant destiné à être mis en œuvre par un serveur du premier cœur de réseau IP multimédia et comprenant :

    ◦ une étape de réplication de la requête en une première requête et en au moins une seconde requête ;
    ◦ une étape de déclenchement d'un routage de la première requête au sein du premier cœur de réseau IP multimédia ; et
    ◦ une étape de déclenchement d'un routage de ladite au moins une deuxième requête selon au moins une route prédéterminée à destination d'au moins une entité d'interconnexion du premier cœur de réseau IP multimédia avec au moins un deuxième cœur de réseau distinct du premier cœur de réseau IP multimédia.

Corrélativement, l'invention vise également un serveur apte à traiter une requête émise par un premier dispositif enregistré auprès d'un premier cœur de réseau IP multimédia à destination d'une identité publique allouée à au moins un deuxième dispositif et connue du premier cœur de réseau IP multimédia, ledit serveur comprenant :

    ◦ un module de réplication, configuré pour répliquer ladite requête en une première requête et en au moins une deuxième requête ;
    ◦ un premier module de routage, configuré pour déclencher un routage de la première requête au sein du premier cœur de réseau IP multimédia ; et
    ◦ un second module de routage, configuré pour déclencher un routage de ladite au moins deuxième requête selon au moins une route prédéterminée à destination d'au moins une entité d'interconnexion du premier cœur de réseau IP multimédia avec au moins un deuxième cœur de réseau distinct du premier cœur de réseau IP multimédia.

Autrement dit, l'invention propose, pour exploiter pleinement le contexte multi-cœurs de réseau IP multimédia et multi-dispositifs décrit précédemment, de répliquer la requête envoyée par le dispositif appelant (premier dispositif au sens de l'invention) via le cœur de réseau appelant (premier cœur de réseau au sens de l'invention), uniquement dans le cas où l'identité publique appelée (c'est-à-dire à laquelle la requête est destinée) est connue du cœur de réseau appelant. Les répliques obtenues sont alors routées d'une part, au sein du cœur de réseau appelant, et d'autre part, vers un ou plusieurs autres cœurs de réseau (deuxième(s) cœur(s) de réseau au sens de l'invention) avec lequel le cœur de réseau appelant a des accords d'interconnexion (et plus particulièrement, avec lequel il dispose de moyens d'interconnexion). De cette sorte, il est possible de transmettre la requête du dispositif appelant aux dispositifs de communication partageant l'identité publique rattachés au cœur de réseau appelant et aux dispositifs de communication partageant l'identité publique rattachés à un cœur de réseau distinct du cœur de réseau appelant.

Il en résulte que si un utilisateur dispose d'un ou de plusieurs dispositifs de communication équipés de piles de protocoles différentes lui permettant de communiquer sur différents cœurs de réseau, il peut être joignable via ces différentes piles dès lors qu'il est enregistré auprès des cœurs de réseau correspondants.

Le traitement de la requête de l'utilisateur est donc optimisé et l'expérience de l'utilisateur s'en voit améliorée.

En effet, dans le premier exemple illustratif envisagé précédent, l'invention prévoit l'envoi d'une réplique du message SIP OPTIONS à la pile de protocole IMS permettant d'accéder aux services ViLTE et ViWIFI proposés par le cœur de réseau A, de sorte que le terminal UEB est informé des capacités du terminal UEA concernant ces services ViLTE et ViWIFI même si la pile de protocole IMS permettant d'accéder aux services vidéo RCS proposés par le cœur de réseau B est désactivée. Une communication vidéo entre les terminaux UEA et UEB sera donc quand même possible.

Dans le deuxième exemple illustratif, grâce à la réplication du message SIP OPTIONS et aux routages des répliques au sein du cœur de réseau B et vers un serveur d'interconnexion avec le cœur de réseau A, le terminal UED peut être informé des capacités des terminaux UEC1 et UEC2 de l'utilisateur. De même, la réplication du message SIP INVITE et le routage conformément à l'invention, permet aux deux terminaux UEC1 et UEC2 de signaler la session visiophonique entrante à l'utilisateur UC qui peut dès lors choisir l'un ou l'autre de ses terminaux pour établir cette session avec le terminal UED, en fonction de ses préférences ou des capacités de ces derniers.

L'invention permet donc de traiter des cas de figure dans lesquels des dispositifs de communication partagent une même identité publique allouée à un utilisateur et sont connus sur une pluralité de cœurs de réseau distincts, tout en tenant compte des spécificités des mécanismes de routage normalisés existants comme celui rappelé précédemment et défini pour l'architecture IMS. L'invention peut de ce fait être intégrée de façon simple dans l'effort de normalisation réalisé dans le cadre de l'architecture IMS de cœurs de réseau IP multimédia.

Toutefois, si l'invention a une application privilégiée lorsque le premier cœur de réseau et le deuxième cœur de réseau sont tous les deux des cœurs de réseau IP multimédia (typiquement des cœurs de réseau IMS), elle peut également s'appliquer dans un contexte où l'un des cœurs de réseau avec lequel le cœur de réseau IP multimédia de l'appelant est interconnecté est un cœur de réseau utilisant une autre technologie telle qu'une technologie circuit (qu'il s'agisse d'un cœur de réseau de transit se situant entre le cœur de réseau IP multimédia de l'appelant et le cœur de réseau IP multimédia de l'appelé, ou du cœur de réseau de l'appelé à proprement parler).

L'invention permet en outre d'optimiser, dans les cas de figure précités, l'expérience utilisateur et d'offrir à l'utilisateur divers services de communication sur ses dispositifs de communication comme si tous ces dispositifs étaient gérés par un seul et unique cœur de réseau.

L'invention offre également la possibilité à des clients de plusieurs cœurs de réseau distincts de bénéficier de tous les services offerts par ces cœurs de réseau et supportés par leurs dispositifs de communication dès lors que des accords d'interconnexion existent entre ces cœurs de réseau distinct. Les opérateurs des cœurs de réseau peuvent ainsi plus aisément mutualiser leurs efforts pour offrir des services complémentaires et attractifs à leurs clients, et accroitre leur satisfaction.

En outre, l'invention permet d'assurer une position de repli pour certains services lorsqu'un dispositif de communication d'un utilisateur appelé est injoignable sur le cœur de réseau appelant et ne lui permet pas d'accéder à ce service, en exploitant les capacités d'un deuxième cœur de réseau auprès duquel est enregistré le dispositif de communication de l'utilisateur ou d'un autre dispositif de communication de l'utilisateur enregistré auprès du cœur de réseau appelant ou du deuxième cœur de réseau.

Dans un mode particulier de réalisation, le procédé de traitement comprend en outre :

— une étape de réception d'au moins une réponse en provenance d'au moins un dit deuxième dispositif ;
— une étape de transmission vers le premier dispositif d'au moins une réponse à ladite requête élaborée à partir d'au moins une dite réponse reçue en fonction d'un type de ladite au moins une réponse reçue.

Ladite au moins une réponse reçue lors de l'étape de réception comprend par exemple au moins une réponse reçue via un dit deuxième cœur de réseau IP multimédia.

De cette sorte, le premier dispositif peut bénéficier d'une vision d'ensemble des réponses qui ont émises par les différents dispositifs de communication partageant l'identité publique destinataire de la requête, quel que soit le(s) cœur(s) de réseau sur le(s)quel(s) ces dispositifs sont enregistrés le cas échéant (premier ou deuxième(s) cœur(s) de réseau).

Différentes stratégies peuvent être adoptées par le serveur du premier cœur de réseau pour élaborer la réponse transmise au premier dispositif.

Ainsi, dans un mode particulier de réalisation, ladite au moins une réponse élaborée comprend :

— toutes les réponses reçues lors de ladite étape de réception ; ou
— la réponse reçue en premier lors de ladite étape de réception ; ou
— la meilleure réponse reçue au regard d'un critère prédéfini parmi des réponses reçues lors de ladite étape de réception au cours d'une première période de temps prédéterminée ;
— une agrégation de contenus extraits des réponses reçues lors de ladite étape de réception au cours d'une deuxième période de temps prédéterminée.

Le choix de l'une ou l'autre de ces stratégies peut dépendre, comme mentionné précédemment du type de réponses reçues, mais également d'un type de la requête émise par le premier dispositif.

Par exemple, si la requête émise est une requête de découverte des capacités des dispositifs de communication utilisant l'identité publique, la stratégie consistant à agréger les contenus extraits des réponses reçues lors de l'étape de réception au cours de la deuxième période de temps prédéterminée permet au premier dispositif d'avoir une vue quasiment exhaustive des capacités de tous les dispositifs de communication utilisant l'identité publique, qu'ils soient rattachés ou non au même cœur de réseau IP multimédia.

Si la requête émise est une requête d'établissement d'une session de communication, la deuxième stratégie permet d'informer le premier dispositif de la réponse du dispositif de communication qui a été sélectionné par l'utilisateur appelé.

Dans un mode particulier de réalisation, l'étape de réplication et les étapes de déclenchement des routages sont mises en œuvre après vérification que ces étapes sont autorisées pour le premier dispositif et/ou pour ledit au moins un deuxième dispositif.

Ce mode de réalisation permet d'avoir un traitement différencié des requêtes émises par différents dispositifs sur le premier cœur de réseau.

Dans un mode particulier de réalisation, l'étape de déclenchement du routage de la première requête et l'étape de déclenchement du routage de ladite au moins une deuxième requête sont mises en œuvre simultanément.

Ce déclenchement simultané des deux routages permet d'accélérer le traitement de la requête par les deux cœurs de réseau.

Comme mentionné précédemment, l'invention a une application privilégiée mais non limitative dans le cadre de cœurs de réseau IP multimédia se basant sur une architecture IMS et utilisant le protocole SIP. Ainsi, dans un mode particulier de réalisation, le premier cœur de réseau IP multimédia met en œuvre le protocole SIP (Session Initiation Protocol) le procédé comprenant en outre :

— une étape de dérivation d'un nom de domaine à partir de l'identité publique ; et

— une étape d'interrogation d'un serveur DNS (Domain Name Server) en utilisant le nom de domaine dérivé ;

l'identité publique étant considérée comme connue du premier cœur de réseau IP multimédia si un identifiant SIP est reçu du serveur DNS en réponse à son interrogation.

Ce mode de réalisation offre une façon simple de contrôler si une identité publique est connue ou non d'un cœur de réseau IMS, et qui s'appuie sur une procédure couramment déployée dans un tel cœur de réseau.

En variante, l'identité publique est considérée comme connue du premier cœur de réseau IP multimédia si une partie utilisateur de l'identité publique est contenue dans une base de données du premier cœur de réseau IP multimédia.

Ce mode de réalisation alternatif a une application privilégiée pour les architectures de cœurs de réseau IP multimédia s'appuyant sur le standard WebRTC, dans lesquelles les serveurs WebRTC des cœurs de réseau maintiennent déjà une telle base de données.

Dans un mode particulier de réalisation :

— le premier cœur de réseau IP multimédia met en œuvre le protocole SIP et l'étape de déclenchement du routage de ladite au moins une deuxième requête n'est activée que si l'interconnexion entre le premier cœur de réseau IP multimédia et ledit au moins un deuxième cœur de réseau est réalisée en utilisant le protocole SIP ; ou

— le premier cœur de réseau IP multimédia met en œuvre au moins un protocole web et l'étape de déclenchement du routage de ladite au moins une deuxième requête n'est activée que si l'interconnexion entre le premier cœur de réseau IP multimédia et ledit au moins un deuxième cœur de réseau est réalisée en utilisant ledit au moins un protocole web.

Autrement dit, dans ce mode de réalisation, on privilégie un routage vers un cœur de réseau qui implémente les mêmes protocoles de communication que le cœur de réseau appelant. Ceci permet de s'affranchir de la présence de passerelles protocolaires au niveau du serveur d'interconnexion.

L'invention peut être avantageusement mise en œuvre au niveau de diverses entités du premier cœur de réseau. Par exemple :

— si le premier cœur de réseau IP multimédia implémente une architecture IMS (IP Multimedia Subsystem), les étapes de vérification, de réplication et de déclenchement des routages peuvent être mises en œuvre par un serveur S-CSCF ou par un serveur d'application du premier cœur de réseau IP multimédia ;

— si le premier cœur de réseau IP multimédia implémente une architecture WebRTC (Web Real Time Communication), les étapes de réplication et de déclenchement des routages peuvent être mises en œuvre par un serveur WebRTC du premier cœur de réseau IP multimédia.

L'invention peut donc être implémentée aisément dans les architectures de cœur de réseau existantes (ex. IMS, WebRTC, etc.), moyennant une adaptation de serveurs déjà présents dans ces architectures.

Dans un mode particulier de réalisation, les différentes étapes du procédé de traitement sont déterminées par des instructions de programmes d'ordinateurs.

En conséquence, l'invention vise aussi un programme d'ordinateur sur un support d'informations, ce programme étant susceptible d'être mis en œuvre dans un serveur ou plus généralement dans un ordinateur, ce programme comportant des instructions adaptées à la mise en œuvre des étapes d'un procédé de traitement tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

L'invention vise également un système de communication comprenant :

— un premier dispositif enregistré auprès d'un premier cœur de réseau IP multimédia, apte à émettre une requête à destination d'une identité publique allouée à au moins un deuxième dispositif ; et

— un serveur du premier cœur de réseau IP multimédia conforme à l'invention et gérant le premier dispositif.

Le système de communication bénéficie des mêmes avantages que ceux cités précédemment pour le procédé de traitement et le serveur selon l'invention.

Dans un mode particulier de réalisation, le système de communication comprend en outre :

— lorsque l'identité publique est partagée par une pluralité de deuxièmes dispositifs dans le premier cœur de réseau IP multimédia, au moins un serveur du premier cœur de réseau IP multimédia gérant la pluralité de deuxièmes dispositifs et configuré pour répliquer la première requête et transmettre les répliques de la première requête à ladite pluralité de deuxièmes dispositifs ; et/ou
— lorsque l'identité publique est partagée par une pluralité de deuxièmes dispositifs dans un dit deuxième cœur de réseau, au moins un serveur dudit deuxième cœur de réseau gérant la pluralité de deuxièmes dispositifs et configuré pour répliquer une dite deuxième requête et transmettre les répliques de ladite deuxième requête à ladite pluralité de deuxièmes dispositifs.

Autrement dit, l'invention se combine aisément à une réplication de la requête dans le cœur de réseau « appelé », dans le cas où une pluralité de dispositifs dans ce cœur de réseau « appelé » partagent l'identité publique à laquelle la requête est destinée. De cette sorte, la requête émise par le premier dispositif est transmise à l'ensemble des deuxièmes dispositifs partageant l'identité publique, quel que soit le cœur de réseau auprès duquel ils sont enregistrés. On exploite de la sorte pleinement les possibilités multi-cœurs et multi-terminaux offertes par les cœurs de réseau IP multimédia.

On peut également envisager, dans d'autres modes de réalisation, que le procédé de traitement, le serveur et le système de communication selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

— la figure 1 représente, dans son environnement, un système de communication conforme à l'invention dans un premier mode de réalisation ;
— la figure 2 représente l'architecture matérielle d'un serveur du système de communication de la figure 1, conforme à l'invention ;
— la figure 3 illustre sous forme d'ordinogramme les principales étapes d'un procédé de traitement selon l'invention tel qu'il est mis en œuvre par le serveur de la figure 2 dans le premier mode de réalisation ;
— la figure 4 représente, dans son environnement, un système de communication conforme à l'invention dans un deuxième mode de réalisation ; et
— la figure 5 illustre sous forme de diagramme de flux les principales étapes d'un procédé de traitement selon l'invention tel qu'il est mis en œuvre par un serveur du système de communication représenté à la figure 4, conforme à l'invention, dans le deuxième mode de réalisation.

Description détaillée de l'invention

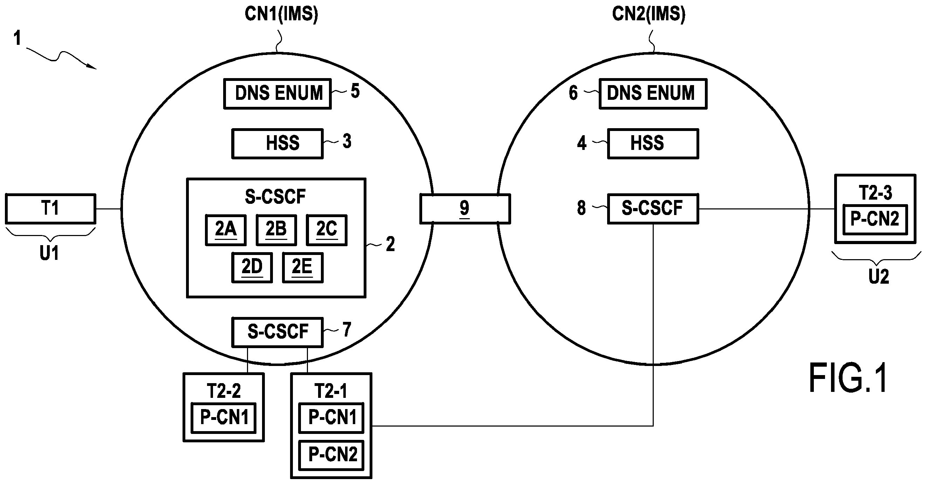

La **figure 1** représente, dans son environnement, un système de communication 1 conforme à l'invention, dans un premier mode particulier de réalisation.

A titre illustratif, on se place sur la figure 1 et dans ce premier mode de réalisation, dans un contexte où un utilisateur U2 possède un ou plusieurs dispositifs de communication tels que des terminaux (ex. smartphones, tablettes numériques, ordinateurs, application logicielle, etc.), référencés de manière générale par T2. Au moins l'un des dispositifs T2 est équipé de deux piles de protocoles IMS distinctes lui permettant de s'enregistrer auprès de et de communiquer sur deux cœurs de réseau IMS distincts CN1 et CN2 (i.e. correspondant à des noms de domaines différenciés), et ce, en utilisant une même identité publique IMPU2 allouée à l'utilisateur U2. Le cas échéant, les autres dispositifs T2 de l'utilisateur U2 disposent ici d'une unique pile de protocole IMS leur permettant de s'enregistrer et de communiquer soit sur le cœur de réseau IMS CN1 soit sur le cœur de réseau CN2. A titre illustratif sur la figure 1, on suppose que l'utilisateur U2 possède un dispositif T2-1 comprenant deux piles de protocoles IMS P-CN1 et P-CN2 lui permettant de s'enregistrer sur les cœurs de réseau CN1 et CN2, un dispositif T2-2 comprenant une unique pile de protocole IMS P-CN1 lui permettant de s'enregistrer sur le cœur de réseau IMS CN1 uniquement et un dispositif T2-3 comprenant une unique pile de protocole IMS P-CN2 lui permettant de s'enregistrer sur le cœur de réseau IMS CN2 uniquement. Les trois dispositifs T2-1, T2-2 et T2-3 partagent la même identité publique IMPU2. Cet exemple n'est bien entendu donné qu'à titre illustratif.

Ces hypothèses ne sont toutefois pas limitatives en soi. Ainsi notamment, les dispositifs de l'utilisateur U2 peuvent être tout type de dispositif apte à communiquer sur un réseau (terminal, serveur, etc.), chaque dispositif pouvant être équipé d'une, deux ou de plus de deux piles de protocoles distinctes lui permettant de s'enregistrer et de communiquer sur autant de cœurs de réseau différents ; en outre, les cœurs de réseau en question peuvent s'appuyer sur une autre architecture de cœur de réseau IP multimédia qu'une architecture IMS telle qu'une architecture WebRTC, une architecture propriétaire, etc. Il est également possible d'envisager un nombre de cœurs de réseau supérieur à 2, l'un de ces cœurs de réseau pouvant s'appuyer sur une autre technologie que la technologie IP comme par exemple sur une technologie circuit, ce cœur de réseau pouvant être par exemple un cœur de réseau de transit situé entre deux cœurs de réseau multimédia.

L'identité publique IMPU2 de l'utilisateur U2 est par exemple un numéro de téléphone fixe ou mobile (ex. IMPU2=0123456789) allouée à l'utilisateur U2 lors de sa souscription à l'un des cœurs de réseau. On note que de façon connue, l'architecture IMS permet à un utilisateur d'avoir plusieurs dispositifs distincts enregistrés, via chacun une identité privée ou IMPI (pour IP Multimedia Private identity) distincte (correspondant à une adresse de contact distincte), auprès d'un cœur de réseau basé sur cette architecture, en association avec une même identité publique d'usager ou IMPU (IP Multimedia Public User identity) connue du cœur de réseau, c'est-à-dire provisionnée ou encore identifiée dans une base de données maintenue par celui-ci comme par exemple dans un serveur d'abonnés. Dans le contexte envisagé à la figure 1, l'utilisateur U2 est donc connu via son identité publique IMPU2 des deux cœurs de réseau CN1 et CN2, et peut avoir simultanément un ou plusieurs dispositifs T2 enregistrés auprès du cœur de réseau CN1 (dans l'exemple, les dispositifs T2-1 et T2-2) et/ou un ou plusieurs dispositifs T2 enregistrés auprès du cœur de réseau CN2 (dans l'exemple les dispositifs T2-1 et T2-3) en association avec son identité publique IMPU2.

Lors de la souscription de l'utilisateur U2 auprès de chacun des cœurs de réseau CN1 et CN2, un identifiant SIP ou URI (pour Uniform Ressource Identifier) lui a été attribué respectivement sur chacun de ces cœurs de réseau. Cette URI SIP est dérivée de l'identité publique IMPU2 de l'utilisateur U2 et du nom de domaine IMS du cœur de réseau considéré (identique pour tous les utilisateurs d'un même cœur de réseau).

Ainsi par exemple, pour un cœur de réseau IP multimédia fixe, l'URI SIP allouée à un utilisateur est constituée d'une partie utilisateur (« user part ») correspondant à son identité publique (traduite dans le format international normalisé E164, c'est-à-dire pour un numéro français, sans le 0 au début et avec l'indicatif +33) et du nom de domaine IMS du cœur de réseau. Par exemple, une telle URI est +33123456789@orange-multimedia.fr où « +33123456789 » correspond à la partie utilisateur et « orange-multimedia.fr » correspond au nom de domaine IMS.

Pour un cœur de réseau IP multimédia mobile, l'URI SIP est normalisée : la partie utilisateur correspond au numéro de téléphone mobile de l'utilisateur (dans le format international normalisé E164), et le nom de domaine est dérivé des codes réseau MNC (pour Mobile Network Code) et pays MCC (pour Mobile Country Code) présents dans la carte SIM (Subscriber Identity Module) de l'utilisateur. Par exemple, pour la France (MCC=208) et l'opérateur Orange (MNC=001), une telle URI SIP est +33123456789@ims.mnc001.mcc208.3gppnetwork.org.

Dans la suite de la description, on note :

— URI2-CN1, l'URI allouée à l'utilisateur U2 par le cœur de réseau CN1. Par exemple :

$$URI2\text{-}CN1 = +33123456789@nomdomCN1,$$

où « 33123456789 » désigne l'identité publique IMPU2 au format E164 et « nomdomCN1 » le nom de domaine associé au cœur de réseau CN1 ; et

— URI2-CN2, l'URI allouée à l'utilisateur U2 par le cœur de réseau CN2. Par exemple :

$$URI2\text{-}CN2 = +33123456789@nomdomCN2,$$

où « 33123456789 » désigne l'identité publique IMPU2 au format E164 et « nomdomCN2 » le nom de domaine associé au cœur de réseau CN2.

Il convient de noter que, dans le contexte de l'invention, il existe une différence entre un dispositif associé à une identité publique qui se trouve dans un état « enregistré » auprès du cœur de réseau et un dispositif associé à une identité publique qui se trouve simplement dans un état « connu » du cœur de réseau.

En effet, un dispositif ou une identité publique utilisée par ce dispositif est dit(e) enregistré(e) auprès du cœur de réseau si le dispositif a réalisé une action positive d'enregistrement auprès du cœur de réseau, typiquement dans le cadre du protocole SIP, s'il a envoyé un message d'enregistrement dédié SIP REGISTER pour s'enregistrer auprès du cœur de réseau et que ce message a été acquitté par le cœur de réseau par un message 200 OK. Cet état enregistré est requis pour que le dispositif puisse communiquer via le cœur de réseau.

Au contraire, un dispositif ou une identité publique utilisée par ce dispositif est dit(e) simplement « connu(e) » du cœur de réseau, si l'identité publique en question est uniquement provisionnée dans une base de données du cœur de réseau (par exemple dans un serveur d'abonnés), suite notamment à la souscription de l'utilisateur du dispositif aux services offerts par le cœur de réseau. Cet état ne présuppose pas qu'un dispositif utilisant l'identité publique ait fait une démarche explicite d'enregistrement auprès du cœur de réseau via l'envoi d'un message d'enregistrement dédié de type SIP REGISTER. On note qu'il suffit qu'une identité publique allouée à un utilisateur soit connue du cœur de réseau pour qu'il lui soit attribué une URI SIP.

Ainsi, au vu de cette distinction, l'utilisateur U2 peut donc disposer de plusieurs dispositifs de communication T2 aptes à utiliser (i.e. à partager) son identité publique IMPU2 connue des cœurs de réseau CN1 et CN2, et avoir à un instant donné seulement une partie voire aucun de ses dispositifs T2 enregistrés auprès des cœurs de réseau CN1 et/ou CN2. Si aucun dispositif T2 n'est enregistré auprès de l'un ou l'autre des cœurs de réseau CN1 et CN2, l'identité publique IMPU2 est considérée ici comme simplement connue de ces cœurs de réseau. Dans la suite de la description, on qualifie indifféremment conformément à cette interprétation de « connu(e)s » ou d'« enregistré(e)s » les utilisateurs des cœurs de réseau, les identités publiques allouées à ces utilisateurs (et en corollaire, à leurs dispositifs) ou aux dispositifs des utilisateurs utilisant ces identités publiques.

Conformément à l'invention, le système de communication 1 comprend un dispositif de communication T1 d'un utilisateur U1 comprenant une pile de protocole IMS lui permettant de s'enregistrer et de communiquer sur le cœur de réseau IMS CN1. Dans l'exemple envisagé ici, le dispositif T1 est connu et enregistré auprès du cœur de réseau IMS CN1 en association avec une identité publique IMPU1 allouée à l'utilisateur U1 (ex. numéro de téléphone ou MSISDN). Aucune limitation n'est attachée à la nature du dispositif de communication T1 qui peut être aussi bien un terminal, un serveur, qu'une application logicielle, etc.

L'utilisateur U1 est identifié sur le cœur de réseau CN1 par son URI SIP, notée URI1, dérivée de son identité publique IMPU1 et du nom de domaine IMS « nomdomCN1 » du cœur de réseau CN1, comme décrit précédemment pour les URI SIP attribuées à l'utilisateur U2.

Le système de communication 1 comprend également un serveur 2 conforme à l'invention. Dans le premier mode de réalisation décrit ici, le serveur 2 est un serveur S-CSCF du cœur de réseau IMS CN1, gérant le dispositif T1 de l'utilisateur U1, autrement dit gérant les communications émises et/ou reçues par le dispositif T1 sur le cœur de réseau CN1.

Comme mentionné précédemment, le cœur de réseau CN1 comme le cœur de réseau CN2 s'appuient ici sur une architecture IMS. De façon connue, une telle architecture IMS se base sur une pluralité d'entités pouvant être hébergées par des équipements distincts et comprenant notamment :

    — un serveur d'abonnés HSS (référencé par 3 pour le cœur de réseau CN1 et par 4 pour le cœur de réseau CN2) contenant la liste des utilisateurs du cœur de réseau, les droits et les autorisations dont ceux-ci bénéficient, ainsi que l'état d'enregistrement du/des dispositifs. Dans le premier mode de réalisation, on suppose par exemple que le serveur d'abonnés HSS 3 contient les utilisateurs U1 et U2 en association avec leurs identités publiques respectives IMPU1 et IMPU2, et que le serveur d'abonnés HSS 4 contient l'utilisateur U2 en association avec son identité publique IMPU2 ;

    — un serveur DNS (référencé par 5 pour le cœur de réseau CN1 et par 6 pour le cœur de réseau CN2), capable de résoudre (i.e. traduire) des noms de domaine en différentes informations, et notamment en URI SIP. Ce serveur met en œuvre ici le mécanisme ENUM et contient l'ensemble des URI SIP des utilisateurs connus du cœur de réseau considéré ;

    — plusieurs serveurs regroupés sous l'appellation CSCF (pour Call Session Control Function), implémentant le protocole SIP et utilisés pour traiter la signalisation SIP dans le cœur de réseau IMS. Ces serveurs incluent en particulier :

        ◦ un ou plusieurs serveurs P-CSCF, points d'entrée des terminaux (dispositifs au sens de l'invention) sur le cœur de réseau IMS ;
        ◦ un ou plusieurs serveurs I-CSCF, jouant le rôle de proxy(s) SIP ;
        ◦ un ou plusieurs serveurs S-CSCF (incluant pour le cœur de réseau CN1, le serveur S-CSCF 2 gérant l'identité publique IMPU1 et donc le dispositif T1 et un serveur S-CSCF 7 gérant l'identité publique IMPU2 et donc les dispositifs T2-1 et T2-2 de l'utilisateur U2, et pour le cœur de réseau CN2, un serveur S-CSCF 8 gérant l'identité publique IMPU2 et donc les dispositifs T2-1 et T2-3), en charge de l'enregistrement des terminaux et du routage des messages SIP émis ou destinés à ces terminaux ;

    — un ou plusieurs serveurs d'application AS (Application Server) en charge du traitement des différents services proposés par le cœur de réseau, et qui peuvent être déclenchés (ou instanciés) par les serveurs S-CSCF ; et

    — divers équipements d'interconnexion avec d'autres cœurs de réseaux ou réseaux. Ces équipements d'interconnexion (référencés par 9 pour l'interconnexion entre le cœur de réseau CN1 et le cœur de réseau CN2) incluent en particulier :

        ◦ pour l'interconnexion avec un réseau circuit fixe ou mobile, des équipements de type MGCF (pour la signalisation) et MGW (pour les flux média) qui permettent d'assurer l'interfonctionnement protocolaire SIP/RTP (Real Time Protocol) (qui sont les protocoles mis en œuvre côté cœur de réseau IP multimédia pour la signalisation et les flux média) et ISUP/circuit (qui correspondent aux protocoles mis en œuvre côté réseau circuit fixe ou mobile), et
        ◦ pour l'interconnexion avec d'autres réseaux IP multimédia, des équipements de type IBCF et IBGF.

Ces différentes entités sont définies par la norme 3GPP et ne sont pas décrites en détail ici. En outre, par souci de simplification, seuls les serveurs HSS 3 et 4, les serveurs DNS 5 et 6, les serveurs S-CSCF 2, 7 et 8 et les équipements d'interconnexion 9 des cœurs de réseau IP multimédia CN1 et CN2 sont représentés sur la figure 1.

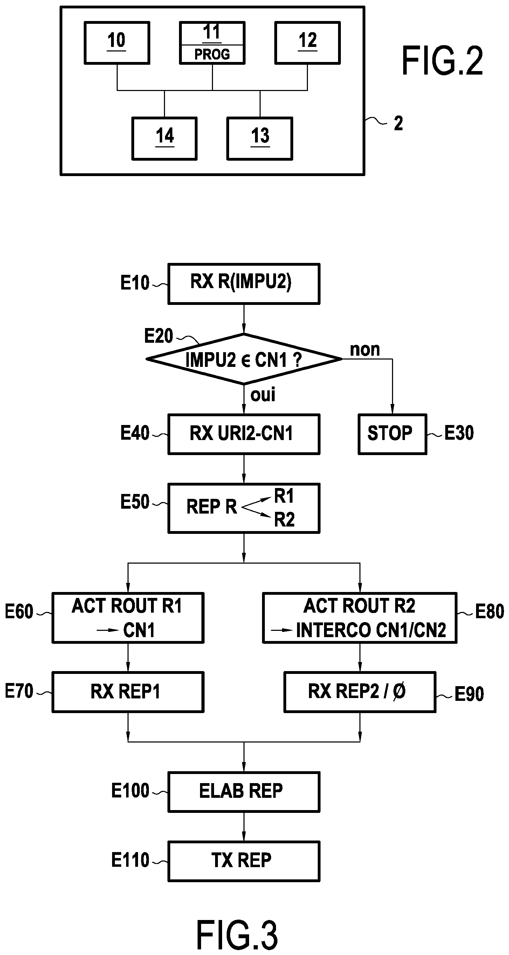

Le serveur S-CSCF 2 selon l'invention se distingue des serveurs S-CSCF connus de la norme 3GPP en ce qu'il est configuré pour mettre en œuvre les différentes étapes d'un procédé de traitement selon l'invention. Il dispose ici à cet effet de l'architecture matérielle d'un ordinateur, telle que représentée schématiquement à la **figure 2.**

Plus particulièrement, le serveur S-CSCF 2 comprend un processeur 10, une mémoire morte 11, une mémoire vive 12, une mémoire non volatile 13 et des moyens de communication 14 lui permettant de communiquer notamment avec les autres entités du cœur de réseau CN1 et intégrant une pile de protocole SIP.

La mémoire morte 11 du serveur S-CSCF 2 constitue un support d'enregistrement ou d'informations conforme à l'invention, lisible par le processeur 10 et sur lequel est enregistré un programme d'ordinateur PROG conforme à l'invention.

Le programme d'ordinateur PROG comporte des instructions pour l'exécution d'un procédé de traitement selon l'invention, appliqué par le serveur S-CSCF 2 notamment à des requêtes émises par le dispositif T1 et plus particulièrement, dans l'exemple envisagé ici, à une requête émise par le dispositif T1 à destination de l'identité publique IMPU2 allouée à l'utilisateur U2 et utilisée par son ou ses dispositifs T2. Ce programme PROG définit, par le biais de ses instructions, des modules fonctionnels du serveur S-CSCF 2 qui s'appuient sur et/ou commandent les éléments matériels 10-14 décrits précédemment. Ces modules comprennent notamment ici, comme illustré à la figure 1 :

— un module de vérification 2A, configuré (i.e. programmé) pour vérifier si l'identité publique à laquelle est destinée la requête considérée (dans l'exemple envisagé ci-dessus, l'identité publique IMPU2), est connue du premier cœur de réseau IP multimédia CN1 ;

— des modules, activés le cas échéant, et comprenant :

∘ un module de réplication 2B, configuré pour répliquer la requête en une première requête et une seconde requête ;
∘ un premier module de routage 2C, configuré pour déclencher un routage de la première requête au sein du premier cœur de réseau CN1, typiquement à destination d'un serveur du premier cœur de réseau IP multimédia gérant l'identité publique. On note que ce serveur peut être le même que le serveur S-CSCF 2 ; et
∘ un second module de routage 2D, configuré pour déclencher un routage de la seconde requête selon une route prédéterminée à destination d'une entité d'interconnexion du premier cœur de réseau CN1 avec un second cœur de réseau IP multimédia distinct du premier cœur de réseau IP multimédia, ce second cœur de réseau étant en l'occurrence ici le cœur de réseau CN2.

Dans le premier mode de réalisation décrit ici, le programme PROG définit également un module d'élaboration 2E d'une réponse à la requête à partir de la ou ou des réponses reçues aux répliques de cette requête (première et deuxième requêtes au sens de l'invention).

Les fonctions de ces différents modules sont expliquées plus en détail maintenant en référence aux étapes du procédé de traitement selon l'invention.

La **figure 3** représente les principales étapes du procédé de traitement selon l'invention telles qu'elles sont mises en œuvre dans le premier mode de réalisation par le serveur S-CSCF 2. On suppose ici que par défaut, ce traitement est appliqué de manière inconditionnelle à toutes les requêtes traitées par le serveur S-CSCF 2 émanant de dispositifs enregistrés auprès du cœur de réseau CN1 et gérés par le serveur S-CSCF 2.

En variante, le traitement peut être activé seulement pour certains dispositifs prédéterminés, ou plus particulièrement pour certaines identités publiques, à l'origine des requêtes ou auxquelles les requêtes sont destinées. Pour permettre ce traitement différencié, on peut envisager d'associer, dans le serveur HSS 3 du cœur de réseau CN1, aux identités publiques provisionnées, une information d'autorisation (et d'activation) ou non du traitement.

Pour illustrer les étapes du procédé de traitement selon l'invention, on s'intéresse ici à une requête SIP R, par exemple une requête SIP INVITE, émise par le dispositif T1 de l'utilisateur U1 à destination de l'identité publique IMPU2 de l'utilisateur U2. On suppose que pour pouvoir envoyer cette requête et communiquer sur le cœur de réseau CN1, le dispositif T1 s'est préalablement enregistré auprès du cœur de réseau CN1, en lui envoyant une requête SIP REGISTER pour laquelle il a reçu un acquittement 200 OK. L'identité publique IMPU1 utilisée par le dispositif T1 est donc non seulement connue du cœur de réseau CN1 mais également enregistrée auprès de celui-ci, notamment auprès du serveur S-CSCF 2 qui gère cette identité publique et les dispositifs de l'utilisateur U1 utilisant cette identité publique pour communiquer.

La requête SIP R émise par le dispositif T1 transite par le serveur P-CSCF du cœur de réseau CN1 et est reçue par le serveur S-CSCF 2, via ses moyens de communications 14 (étape E10). Elle comprend dans son entête Request URI l'identité publique IMPU2.

Conformément à l'invention, le serveur S-CSCF 2, via son module de vérification 2A, vérifie si l'identité publique IMPU2 est connue du cœur de réseau CN1 (étape E20).

A cet effet, dans le premier mode de réalisation décrit ici, le module de vérification 2A interroge le serveur DNS ENUM 5 du cœur de réseau CN1.

Plus précisément, il extrait l'identité publique IMPU2 de l'entête Request URI de la requête R et la transforme dans le format international normalisé E164. Cette transformation, pour une identité publique IMPU2 de type numéro de téléphone à 10 chiffres commençant par 0, consiste à supprimer le 0 et à lui adjoindre le préfixe +33 pour la France : ainsi, si l'IMPU2 est, comme dans l'exemple illustratif fourni précédemment, 0123456789, le module de vérification 2A obtient +33123456789.

Puis le module de vérification 2A transforme le numéro dans le format E164 en un nom de domaine : à cette fin, il inverse le numéro E164 et lui adjoint le suffixe arpa.net. On obtient dans l'exemple envisagé ci-dessus 9.8.7.6.5.4.3.2.1.3.3.arpa.net. Le module de vérification 2A interroge ensuite le serveur DNS ENUM 5 en utilisant le nom de domaine ainsi obtenu.

Si le serveur DNS ENUM 5 contient une URI SIP en association avec ce nom de domaine, cela signifie que l'identité publique IMPU2 est connue du cœur de réseau CN1 (réponse oui à l'étape test E20), et le serveur DNS ENUM 5 retourne au serveur S-CSCF 2 l'URI correspondante (à savoir ici l'URI URI2-CN1) (étape E40).

Sinon, l'identité publique IMPU2 n'est pas connue du réseau CN1 (réponse non à l'étape test E20), et le procédé de traitement selon l'invention s'arrête (étape E30). La requête R est traitée conformément au mécanisme de routage connu de l'état de la technique, autrement dit, elle est routée vers une route préconfigurée, déterminée en fonction d'un ou de plusieurs paramètres, comme par exemple du préfixe de l'identité publique IMPU2 (ex. « +33 ») et/ou d'un préfixe de portabilité de numéro retourné par un serveur de portabilité interrogé à partir de l'identité publique IMPU2 (ce serveur pouvant être le serveur DNS ENUM 5 ou un serveur interconnecté au serveur DNS ENUM 5) et que le serveur S-CSCF rapproche d'une table de routage contenant des routes préconfigurées et/ou d'un préfixe de routage technique (RN).

La réception de l'URI URI2-CN1 par le module de vérification 2A du serveur S-CSCF 2 déclenche la réplication de la requête R (i.e. duplication ici, deux cœurs de réseau CN1 et CN2 distincts étant considérés), par le module de réplication 2B, en une première requête R1 et en une deuxième requête R2 (étape E50). Cette réplication (ou « forking » en anglais) peut être réalisée de façon similaire ou identique à ce qui est mis en œuvre aujourd'hui dans les architectures IMS côté appelé pour tenir compte du partage d'une même IMPU par plusieurs dispositifs d'un utilisateur (et décrit dans le document IETF RFC3261).

Puis, le premier module de routage 2C du serveur S-CSCF 2 déclenche le routage de la première requête R1 en « local », c'est-à-dire au sein du domaine IMS correspondant au cœur de réseau CN1 (étape E60).

Il procède à cet effet comme défini dans la norme 3GPP 24.229 et rappelé précédemment en routant la première requête R1 vers un serveur I-CSCF du cœur de réseau CN1 (qui peut être colocalisé avec le serveur S-CSCF 2).

Le serveur I-CSCF interroge le serveur HSS 3 du cœur de réseau CN1 via le protocole Diameter, en lui fournissant l'URI URI2-CN1 reçue à l'étape E40 et contenue dans la réplique R1. Le serveur HSS 3 retourne au serveur I-CSCF l'adresse de joignabilité du serveur S-CSCF du cœur de réseau CN1 en charge de l'utilisateur U2. Il s'agit, dans l'exemple illustré à la figure 1 du serveur S-CSCF 7. Le serveur I-CSCF route la requête R1 vers le serveur S-CSCF 7.

On note que dans l'exemple envisagé, le serveur S-CSCF 7 est différent du serveur S-CSCF 2. Toutefois, ceci n'est pas une obligation et l'invention s'applique également dans le cas où un même serveur S-CSCF est en charge de l'utilisateur U1 (et de ses dispositifs) et de l'utilisateur U2 (et de ses dispositifs). Auquel cas l'étape de déclenchement du routage consiste à router par le serveur S-CSCF 2 la requête R1 vers les dispositifs T2 enregistrés auprès de lui.

Le serveur S-CSCF 7 route ensuite à son tour la requête R1 vers le ou les dispositifs T2 de l'utilisateur U2 enregistrés le cas échéant auprès du cœur de réseau CN1. Comme mentionné précédemment, plusieurs cas de figure peuvent se présenter lorsque le serveur S-CSCF 7 reçoit la requête R1 :

— aucun dispositif de l'utilisateur U2 n'est enregistré auprès du cœur de réseau CN1 en association avec l'identité publique IMPU2 : dans ce cas, le serveur S-CSCF 7 envoie un message de réponse REP1 à la requête R1 à destination du dispositif T1 pour signaler l'absence de dispositif enregistré pour l'identité publique IMPU2. Il s'agit par exemple d'un message de réponse SIP 480 Temporarily Unavailable;
— un seul dispositif T2 de l'utilisateur U2 est enregistré auprès du cœur de réseau CN1 en association avec l'identité publique IMPU2 (par exemple T2-1 ou T2-2) : la requête R1 est routée par le serveur S-CSCF 7 vers cet unique dispositif T2 qui y répond en fonction de son état et des circonstances par un message de réponse REP1 tel que prévu par la norme RFC 3261. Le message de réponse REP1 est un message SIP ayant un code de statut 1xx, 2xx, 3xx, 4xx, 5xx, 6xx comme indiqué à la section 7.2 du document RFC 3261. Pour rappel :

○ un message SIP 1xx indique une réponse provisoire (requête toujours en cours de traitement) ;
○ un message SIP 2xx indique un succès de la requête ;
○ un message SIP 3xx indique une redirection de la requête ;
○ un message SIP 4xx traduit une erreur liée au client (mauvaise syntaxe de la requête ou incapacité à traiter la requête) ;
○ un message SIP 5xx traduit une erreur liée au serveur (incapacité à traiter une requête apparemment valide) ; et
○ un message 6xx traduit un échec global à traiter la requête au sein du cœur de réseau.

Il convient de noter que le dispositif T2 peut être encore enregistré auprès du cœur de réseau CN1 mais n'être plus joignable, par exemple du fait d'une perte de connectivité ou autre, auquel cas il n'est pas en mesure de répondre. En l'absence de réponse reçue par le serveur S-CSCF 7 à l'issue d'une période de temps prédéterminé, le serveur S-CSCF 7 répond comme indiqué précédemment dans le premier cas de figure où aucun terminal n'est enregistré ;

— plusieurs (N, N désignant un entier supérieur à 1) dispositifs T2 de l'utilisateur U2 sont enregistrés simultanément avec plusieurs identités privées et adresses de contact auprès du cœur de réseau CN1 et du serveur S-CSCF 7 (dans l'exemple de la figure 1, les terminaux T2-1 et T2-2) : dans ce cas, le serveur S-CSCF 7, ou un serveur d'application du cœur de réseau CN1 instancié par le serveur S-CSCF 7 ou en standalone, réplique la requête R1 en autant de répliques R1-1, R1-2,..., R1-N que de dispositifs T2 enregistrés. Les répliques R1-1,...,R1-N sont ensuite transmises par le serveur S-CSCF 7 ou par le serveur d'application aux dispositifs T2 enregistrés. Le serveur S-CSCF 7 ou le serveur d'application traite la ou les réponses REP1-1,...,REP1-N reçues des N dispositifs T2 enregistrés comme décrit dans le document RFC 3261, et renvoie la ou les réponses obtenues à destination du dispositif T1. On note que dans le cas où les répliques sont des répliques d'un message SIP OPTIONS, et que les réponses REP1-1,...REP1-N reçues contiennent les capacités (i.e. services supportés) et/ou état des N dispositifs T2 enregistrés auprès du serveur S-CSCF 7, le serveur S-CSCF 7 ou le serveur d'application peut élaborer une réponse REP1 à la requête R1 et destinée au terminal T1 comprenant l'agrégation des capacités et/ou état contenus dans les réponses REP1-1,...,REP1-N.

Quel que soit le cas de figure envisagé, la ou les réponses renvoyées par le serveur S-CSCF 7 emprunte(nt) le chemin inverse à la requête R1, et est ou sont reçues par le serveur S-CSCF 2 (étape E70). Dans la suite de la description, par souci de simplification, on désigne de façon générale par réponse REP1 la réponse simple ou les réponses multiples renvoyée par le serveur S-CSCF 7 via le cœur de réseau CN1.

Dans le premier mode de réalisation décrit ici, simultanément au déclenchement par le premier module de routage 2C du serveur S-CSCF 2 du routage de la première requête R1 au sein du domaine IMS « local » correspondant au cœur de réseau CN1, le deuxième module de routage 2D du serveur S-CSCF 2 déclenche le routage de la deuxième requête R2 en dehors du domaine IMS correspondant au cœur de réseau CN1 (étape E80).

Il procède à cet effet comme défini dans la norme et rappelé précédemment, en routant la deuxième requête R2 vers la fonction interne BGCF du serveur S-CSCF 2. Cette fonction BGCF applique à la requête R2 un routage défini par défaut et choisi parmi un ensemble de routes préconfigurées (i.e. prédéterminées) au niveau du serveur S-CSCF 2, en fonction de divers paramètres comme par exemple du préfixe de l'identité publique IMPU2 et/ou d'un préfixe de portabilité retourné par un serveur de portabilité interrogé à partir de l'identité publique IMPU2 (ce serveur pouvant être le serveur DNS ENUM 5 ou un serveur interconnecté au serveur DNS ENUM 5) et que le serveur S-CSCF rapproche d'une table de routage contenant des routes préconfigurées permettant de s'interconnecter avec d'autres cœurs de réseaux (i.e. d'autres domaines) et/ou d'un préfixe de routage technique.

Le serveur S-CSCF 2 peut être configuré préalablement avec diverses routes prédéterminées en fonction des accords d'interconnexion existants entre l'opérateur du cœur de réseau CN1 et les opérateurs d'autres cœurs de réseau. En particulier, si l'opérateur du cœur de réseau CN1 sait à l'avance que son utilisateur U2 est susceptible d'utiliser également le cœur de réseau CN2 pour communiquer via ses dispositifs T2 en utilisant l'identité publique IMPU2, il peut configurer à l'avance le serveur S-CSCF 2 en charge de cet utilisateur avec une route conduisant au cœur de réseau CN2. L'information de rattachement de l'utilisateur U2 à plusieurs cœurs de réseau IMS peut être stockée dans le serveur HSS 3 du cœur de réseau CN1.

En outre, les routes prédéterminées par défaut avec lesquelles le serveur S-CSCF 2 est configuré dépendent de la nature des interconnexions réalisées entre le cœur de réseau CN1 et les autres cœurs de réseau considérés.

Par exemple, si comme supposé ici, des accords d'interconnexion existent avec l'opérateur en charge du cœur de réseau CN2 en mode SIP ou si un routage par défaut vers un hub SIP est préconfiguré au niveau du serveur S-CSCF 2, la fonction BGCF du serveur S-CSCF 2 route la requête R2 vers un serveur d'interconnexion 9 du cœur de réseau CN1 assurant l'interconnexion avec le cœur de réseau CN2 en mode SIP. Ce serveur d'interconnexion 9 comprend une fonction IBCF pour assurer l'interconnexion au niveau de la signalisation SIP et une fonction IBGF pour assurer l'interconnexion au niveau du flux média. Ces fonctions sont connues en soi pour une architecture IMS et non décrites ici.

On note qu'une fonction de réplication peut être appliquée le cas échéant au sein du cœur de réseau CN2 si plusieurs dispositifs T2 sont enregistrés pour l'utilisateur U2, par le serveur S-CSCF 8 gérant ces dispositifs T2 ou par un serveur d'application instancié par celui-ci ou non. La fonction de réplication renvoie à destination du dispositif T1 une ou plusieurs réponses à la requête R2, désignée(s) de façon générale par réponse REP2 par souci de simplification (REP2 pouvant être simple ou multiple), et élaborée(s) comme décrit dans le document RFC 3261. Cette réponse REP2 emprunte le chemin inverse à la requête R2, et est reçue par le serveur S-CSCF 2 (étape E90).

Selon un autre exemple, si des accords d'interconnexion existent avec l'opérateur en charge du cœur de réseau CN2 selon un mode circuit (ex. le cœur de réseau CN2 est un cœur de réseau utilisant une technologie circuit ou est accessible via un cœur de réseau de transit utilisant la technologie circuit) ou si un routage par défaut vers un hub circuit ISUP est préconfiguré au niveau du serveur S-CSCF 2, la fonction BGCF du serveur S-CSCF 2 route la requête R2 vers un serveur d'interconnexion 9 du cœur de réseau CN1 assurant l'interconnexion avec le cœur de réseau CN2 en mode circuit. Ce serveur d'interconnexion 9 comprend une fonction MGCF de passerelle protocolaire SIP-ISUP/BICC pour assurer l'interconnexion au niveau de la signalisation, et une fonction MGW de passerelle protocolaire RTP - circuit pour assurer l'interconnexion au niveau du flux média. Ces fonctions sont connues en soi pour une architecture IMS et non décrites ici. En outre, dans ce cas, soit aucune réponse n'est renvoyée, soit une unique réponse REP2 à la requête R2 est renvoyée par un dispositif T2 de l'utilisateur U2 (la technologie circuit n'offrant pas la possibilité de gérer plusieurs dispositifs partageant la même identique publique contrairement aux architectures IP multimédia IMS, il n'y a pas de réplication côté appelé). La réponse REP2 emprunte le cas échéant le chemin inverse à la requête R2, et est reçue par le serveur S-CSCF 2 (étape E90).

Dans une variante de réalisation, on peut envisager que le serveur S-CSCF 2 ne déclenche le routage de la requête R2 vers le serveur d'interconnexion 9 que si l'interconnexion assurée avec le cœur de réseau CN2 est assurée en utilisant le protocole SIP (autrement dit, que si le cœur de réseau CN2 est un cœur de réseau IP multimédia et qu'aucune passerelle protocolaire n'est requise pour la signalisation).

Ainsi, grâce à l'invention, les piles IMS de tous les dispositifs T2 de l'utilisateur U2 enregistrés auprès d'un cœur de réseau sont contactées lorsque le dispositif T1 émet une requête à destination de l'IMPU de l'utilisateur U2, que les dispositifs soient enregistrés sur le cœur de réseau CN1 et/ou sur le cœur de réseau CN2.

A titre illustratif, dans l'exemple envisagé ici d'une requête R SIP INVITE, les dispositifs T2-1, T2-2, et T2-3, s'ils sont enregistrés sur leurs cœurs de réseaux respectifs, sonnent et alertent l'utilisateur U2 sur réception des répliques de la requête R qui leur sont adressées. Ils envoient chacun, durant cette phase de sonnerie, une réponse SIP provisoire à destination du dispositif T1 de type 180 Ringing, qui emprunte le chemin inverse de la réplique de la requête R à laquelle elle répond.

L'utilisateur U2 peut alors prendre la communication sur n'importe lequel de ses dispositifs T2 indifféremment. On suppose ici qu'il prend la communication sur le dispositif T2-3. Celui-ci émet alors via le cœur de réseau CN2 un message de réponse SIP 200 OK en réponse à la réplique R2, qui emprunte le chemin inverse de la réplique R2 jusqu'au serveur S-CSCF 2. On note que cette réponse transite par le serveur S-CSCF 8 qui, ayant détecté qu'un dispositif a accepté la communication, envoie alors un message SIP CANCEL d'annulation de la requête R2 au dispositif T2-1 auquel le dispositif T2-1 répond par un message 200(OK) après avoir arrêté de sonner. Puis le dispositif T2-1 envoie un message SIP 487 Request Terminated vers le serveur S-CSCF 8 qui acquitte cette réponse SIP finale via un acquittement SIP ACK.

De manière similaire, sur réception de la réponse 200 OK du dispositif T2-3, le serveur S-CSCF 2 envoie un message SIP CANCEL d'annulation de la requête R1 aux dispositifs T2-1 et T2-2 enregistrés le cas échéant sur le cœur de réseau CN1. Les dispositifs T2-1 et T2-2 arrêtent de sonner, répondent à ce message SIP CANCEL par un message 200(OK), puis envoient un message SIP 487 Request Terminated vers le serveur S-CSCF 2 qui acquitte cette réponse SIP finale via un message SIP ACK d'acquittement.

De manière générale, suite aux routages des répliques R1 et R2 de la requête R, le serveur S-CSCF 2 a donc reçu au moins une réponse REP1 simple ou multiple via le cœur de réseau CN1 (i.e. en provenance du cœur de réseau CN1, étape E70), que l'utilisateur U2 ait ou non des dispositifs enregistrés auprès du cœur de réseau CN1, et aucune réponse ou une réponse simple ou multiple REP2 reçue via le cœur de réseau CN2 (i.e. en provenance du cœur de réseau CN2, étape E90).

Le module d'élaboration 2E du serveur S-CSCF 2 élabore ensuite une ou plusieurs réponses à la requête R, désignée(s) dans la suite de la description de façon générale par « réponse REP » que celle-ci soit simple ou multiple, à partir des réponses REP1 et REP2 qu'il a reçues le cas échéant aux répliques R1 et R2 (étape E100).

Dans le premier mode de réalisation décrit ici, le module d'élaboration 2E procède, pour élaborer sa réponse REP de façon similaire à ce qui a été appliqué par le serveur S-CSCF 7 lorsque plusieurs dispositifs T2 sont enregistrés auprès du cœur de réseau CN1 pour la même identité publique IMPU2. Plus précisément, la réponse REP peut être élaborée par le module d'élaboration 2E selon l'une ou l'autre des stratégies suivantes :

— première stratégie : la réponse REP comprend toutes les réponses REP1 et REP2 reçues le cas échéant aux répliques R1 et R2 de la requête R lors des étapes de réception E70 et E90 ; ou

— deuxième stratégie : la réponse REP comprend la réponse REP1 ou REP2 reçue en premier par le serveur S-CSCF 2 ou la réponse REP1 ou REP2 reçue en premier d'un type prédéterminé (ex. première réponse finale de type 2xx) ; ou

— troisième stratégie : la réponse REP comprend la meilleure réponse reçue parmi les réponses REP1 et REP2 reçues le cas échéant au cours d'une première période de temps T1 prédéterminée. Par « meilleure », on entend ici la plus favorable du point de vue du traitement de la requête R, c'est-à-dire celle qui favorise son traitement ; ou
— quatrième stratégie : la réponse REP comprend une agrégation de contenus extraits de toutes les réponses REP1 et REP2 reçues le cas échéant au cours d'une deuxième période de temps prédéterminée T2 (ex. T2=2s) pouvant être différente de la période de temps T1.

Ces stratégies d'élaboration de la réponse REP ne sont données qu'à titre illustratif, et d'autres stratégies encore peuvent être envisagées.

Le choix de l'une et/ou l'autre de ces stratégies pour élaborer la réponse REP peut dépendre de différents paramètres. Il peut dépendre notamment du type de réponses reçues par le serveur S-CSCF 2 aux répliques R1 et R2 et contenues dans les réponses REP1 et REP2 (c'est-à-dire ici des codes de statut sur lesquels se basent les contenus de ces réponses) et/ou du type de requête R émise par le terminal T1.

Ainsi, pour une requête R s'appuyant sur la méthode SIP INVITE comme dans le cas envisagé à titre illustratif ici, le module d'élaboration 2E peut appliquer :

— la première stratégie lorsque les réponses REP1 et REP2 reçues comprennent des réponses provisoires s'appuyant sur un code de statut ou d'état 1xx ;
— la deuxième stratégie lorsque les réponses REP1 et REP2 reçues comprennent des réponses s'appuyant sur un code de statut ou d'état 2xx ou 3xx ; et
— la troisième stratégie lorsque les réponses REP1 et REP2 reçues comprennent des réponses s'appuyant sur un code de statut 4xx, 5xx ou 6xx.

Dans l'exemple illustratif considéré précédemment où le dispositif T2-3 accepte la requête et établit une communication avec le dispositif T1, le serveur S-CSCF 2 transmet toutes les réponses provisoires 180 Ringing reçues via les cœurs de réseau CN1 et CN2, puis ne transmet que la réponse définitive 200 OK émise par le dispositif T2-3 lorsqu'il accepte la requête.

Pour tout autre type de requêtes SIP à l'exception d'une requête s'appuyant sur la méthode SIP OPTIONS, le module d'élaboration 2E peut appliquer :

— la deuxième stratégie en transmettant la première réponse finale reçue parmi les réponses REP1 et REP2 s'appuyant sur un code de statut 2xx ; et
— la troisième stratégie lorsque les réponses reçues REP1 et REP2 comprennent des réponses s'appuyant sur un code de statut 3xx, 4xx, 5xx ou 6xx.

Pour une requête s'appuyant sur la méthode SIP OPTIONS (message d'auto-découverte des capacités d'un dispositif distant), le module d'élaboration 2E peut appliquer la quatrième stratégie consistant à élaborer une réponse REP à la requête R à partir des contenus des réponses REP1 et REP2 reçues le cas échéant au cours de la deuxième période de temps prédéterminée T2. Ces réponses, dans le cadre d'une requête SIP OPTIONS, contiennent les capacités (i.e. services supportés) et/ou l'état des dispositifs ayant reçu la requête. L'agrégation de ces informations permet au dispositif T1 d'avoir une vue d'ensemble de toutes les capacités des dispositifs T2 de l'utilisateur U2 enregistrés auprès d'un cœur de réseau (notamment si une telle agrégation est également mise en œuvre côté appelé au niveau des serveurs S-CSCF 7 et S-CSCF 8).

La réponse REP élaborée par le serveur S-CSCF 2 est ensuite transmise au dispositif T1 de l'utilisateur U1 (étape E110).

Dans le premier mode de réalisation décrit ici, le procédé de traitement selon l'invention est mis en œuvre par le serveur S-CSCF 2. Toutefois cette hypothèse n'est pas limitative et le procédé de traitement selon l'invention peut être mis en œuvre par une autre entité du cœur de réseau CN1 comme par exemple par un serveur d'application instancié à cet effet par le serveur S-CSCF 2 ou par un serveur d'application dédié différent du serveur S-CSCF 2.

Par ailleurs, dans le premier mode de réalisation décrit ici, seul le serveur S-CSCF 2 est conforme à l'invention. En variante, tous les serveurs S-CSCF des cœurs de réseau CN1 et CN2 peuvent être également conformes à l'invention.

En outre, dans le premier mode de réalisation décrit ici, les cœurs de réseau IP multimédia considérés sont des cœurs de réseaux implémentant une architecture IMS et basés sur l'utilisation du protocole de signalisation SIP. L'invention s'applique toutefois à d'autres architectures de cœurs de réseau IP multimédia, comme par exemple à des architectures basées sur le standard WebRTC (Web Real Time Communication). De façon connue, WebRTC définit un ensemble de protocoles de communication et d'interfaces de programmation API (pour Application Programming interfaces) permettant les communications web en temps réel entre des dispositifs équipés de navigateurs web.

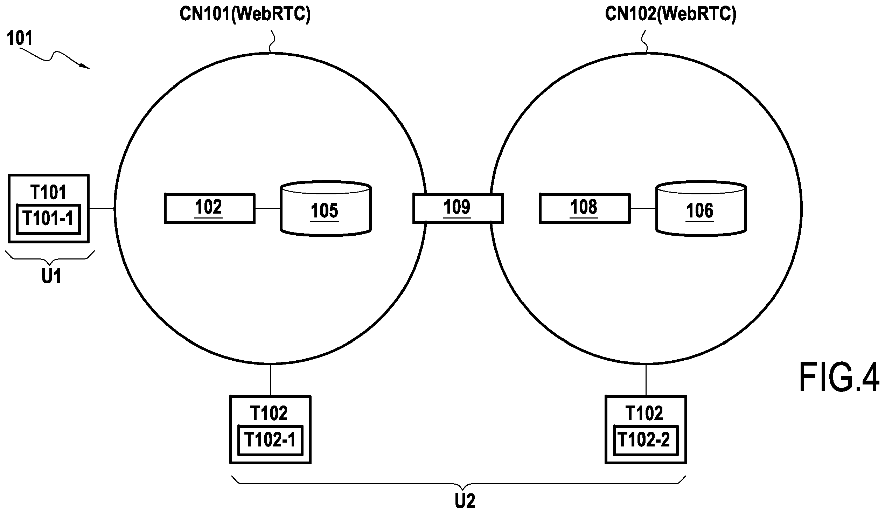

La **figure 4** représente un système de communication 101 conforme à l'invention dans un deuxième mode de réalisation dans lequel les cœurs de réseau IP multimédia considérés, désignés respectivement par CN101 et CN102 s'appuient sur une architecture WebRTC. Ces cœurs de réseau sont associés à deux noms de domaine nomdomCN101 et nomdomCN102 différents.

Par souci de simplification, les mêmes références que sur la figure 1, à une incrémentation de 100 près, sont utilisées sur la figure 4 pour désigner des entités remplissant dans le deuxième mode de réalisation des fonctions similaires ou identiques vis-à-vis de l'invention aux entités impliquées dans le premier mode de réalisation. Ainsi le cœur de réseau IP multimédia CN101 sur la figure 4 joue un rôle similaire ou identique au cœur de réseau IP multimédia CN1 sur la figure 1, etc.

Conformément à l'invention, le système de communication 101 comprend un dispositif de communication T101 d'un utilisateur U101, équipé d'un navigateur web et comprenant un client WebRTC T101-1 lui permettant de s'enregistrer et de communiquer sur le cœur de réseau CN101 en utilisant une identité publique IMPU101 allouée à l'utilisateur U101 et associée au nom de domaine nomdomCN101 correspondant au cœur de réseau CN101.

Le dispositif T101 est supposé ici connu et enregistré auprès du cœur de réseau CN101. Il est référencé à ce titre dans une base de données 105 du cœur de réseau CN101 en association avec son identité publique IMPU101. L'identité publique IMPU1 correspond ici à la partie utilisateur d'un identifiant ou d'une URI de l'utilisateur 101 sur le cœur de réseau CN101 se présentant sous la forme partie-utilisateur@nomdomC101. A titre illustratif, l'identité publique IMPU101 allouée à l'utilisateur U101 est par exemple : IMPU101= nomU101.prenomU101 pour une URI de la forme nom.prenom@nomdomCN101.

Par ailleurs, sur l'exemple de la figure 4, on considère un autre utilisateur U102 possédant un dispositif de communication T102 équipé d'un navigateur web et de deux clients WebRTC distincts référencés par T102-1 et T102-2 lui permettant respectivement de s'enregistrer et de communiquer sur les deux cœurs de réseau IP multimédia CN101 et CN102 en utilisant une même identité publique IMPU102 allouée à l'utilisateur U102, et associée respectivement aux deux noms de domaine nomdomCN101 et nomdomCN102 correspondant aux deux cœurs de réseau CN101 et CN102. L'utilisateur U102 est supposé connu des deux cœurs de réseau CN101 et CN102 et répertorié en association avec son identité publique IMPU102 dans la base de données 105 du cœur de réseau CN101 et dans une base de données 106 du cœur de réseau CN102. L'identité publique IMPU102 est par exemple ici IMPU2= nomU102.prénomU102.

Conformément au standard WebRTC, chaque cœur de réseau CN101 et CN102 comprend :

— au moins un serveur WebRTC (référencé par 102 pour le cœur de réseau CN101 et par 108 pour le cœur de réseau CN102), apte à fournir un service WebRTC aux utilisateurs ayant souscrit à ce service auprès des opérateurs ou fournisseurs de service des cœurs de réseau CN101 et CN102. Les caractéristiques et fonctions d'un serveur WebRTC sont connues en soi et non décrites en détail ici. Dans le deuxième mode de réalisation décrit ici, le serveur WebRTC 102 est en outre conforme à l'invention et configuré pour mettre en œuvre un procédé de traitement selon l'invention ; et

— un serveur d'interconnexion référencé par 109 réalisant l'interconnexion entre le cœur de réseau CN101 et le cœur de réseau CN102. Ce serveur d'interconnexion est un serveur proxy bien connu en soi, placé ici en coupure de flux entre les deux serveurs WebRTC 102 et 108 (autrement dit, tous les messages de signalisation échangés entre ces deux serveurs transitent par le serveur d'interconnexion 109).

On suppose ici que le serveur WebRTC 102 gère l'identité publique des utilisateurs U101 et U102 lorsque leurs dispositifs respectifs T101 et T102 sont enregistrés sur le cœur de réseau CN101 (c'est-à-dire lorsqu'ils sont authentifiés auprès du serveur WebRTC 102 et ont établis une session de communication avec celui-ci), et que le serveur WebRTC 108 gère l'identité publique de l'utilisateur U102 lorsque son dispositif T102 est enregistré sur le cœur de réseau CN102 (c'est-à-dire lorsqu'il est authentifié auprès du serveur WebRTC 108 et a établi une session de communication avec celui-ci).

Dans le deuxième mode de réalisation décrit ici, le serveur WebRTC 102 dispose de l'architecture matérielle d'un ordinateur, identique à celle du serveur S-CSCF 2 décrite précédemment en référence à la figure 2. Il comprend un processeur, une mémoire morte, une mémoire vive, une mémoire non volatile et des moyens de communication lui permettant de communiquer en particulier avec les dispositifs T101 et T102 ainsi qu'avec les entités des cœurs de réseau CN101 et CN102, en utilisant notamment les protocoles web http, WebSocket, JSON, etc.

La mémoire morte du serveur WebRTC 102 constitue un support d'enregistrement ou d'informations conforme à l'invention, lisible par le processeur du serveur 102 et sur lequel est enregistré un programme d'ordinateur conforme à l'invention. Ce programme d'ordinateur comporte des instructions pour l'exécution d'un procédé de traitement selon l'invention, appliqué par le serveur WebRTC 102 aux requêtes émises par le dispositif T101 et plus particulièrement, dans l'exemple envisagé ici, à une requête émise par le dispositif T101 à destination de l'identité publique IMPU2 allouée à l'utilisateur U102 et utilisée par son dispositif T102. Ce programme d'ordinateur définit des modules de vérification, réplication, de routage et d'élaboration similaires ou identiques à ceux décrits précédemment pour le serveur S-CSCF 2 mais adaptés à une architecture de cœur de réseau multimédia WebRTC.

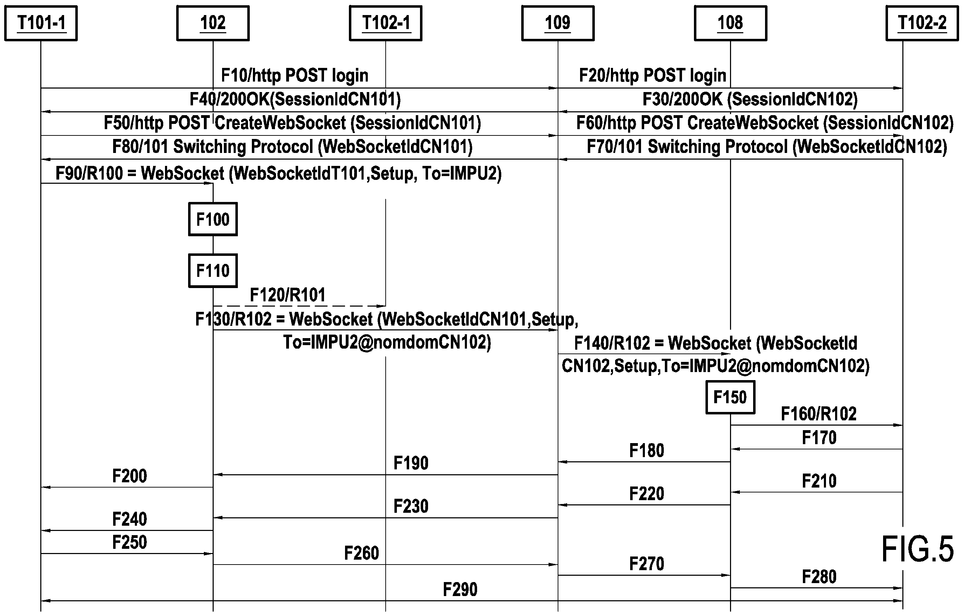

La **figure 5** illustre, sous forme de diagramme de flux, les principales étapes du procédé de traitement mis en œuvre par le serveur WebRTC 102 dans le deuxième mode de réalisation.

On suppose que le serveur WebRTC 102 est configuré préalablement avec une route par défaut pour réaliser l'interconnexion entre les cœurs de réseau CN1 et CN2. Cette route passe par le serveur d'interconnexion 109 et aboutit au serveur WebRTC 108.

La configuration du serveur WebRTC 102 avec une telle route consiste ici à établir une communication bidirectionnelle (« full duplex ») entre le serveur WebRTC 102 et le serveur WebRTC 108, via le serveur d'interconnexion 109, en utilisant les protocoles web http et WebSocket. L'établissement de cette communication est illustré par les étapes F10-F80 représentées sur la figure 5.

Il comprend l'envoi par le serveur WebRTC 102 d'une requête http Post Login au serveur WebRTC 108 via le serveur d'interconnexion 109 (étapes F10 et F20). Cette requête comprend un login et un mot de passe associés au serveur WebRTC 102 lui permettant de s'authentifier auprès du serveur WebRTC 108. Suite à l'authentification du serveur WebRTC 102, un message 200 OK comprenant un identifiant de session SessionIdCN102 sur le cœur de réseau CN102 est renvoyé par le serveur WebRTC 108 au serveur WebRTC 102 (étape F30). Ce message est intercepté par le serveur d'interconnexion 109 qui remplace dans le message l'identifiant de session SessionIdCN102 par un identifiant de session SessionIdCN101 sur le cœur de réseau CN101. Le message 200 OK contenant l'identifiant de session SessionIdCN101 est ensuite transmis au serveur WebRTC 102 (étape F40).

Sur réception du message 200 OK, le serveur WebRTC 102 envoie une requête http Post CreateWebSocket de création d'une session WebSocket avec le serveur WebRTC 108 contenant l'identifiant de session SessionIdCN101 (étape F50). Cette requête est interceptée par le serveur d'interconnexion 109 qui remplace l'identifiant de session SessionIdCN101 par l'identifiant de session SessionIdCN102 avant de transmettre la requête au serveur WebRTC 108 (étape F60).

Sur réception de la requête http Post CreateWebSocket contenant l'identifiant SessionIdCN2, une session WebSocket est établie entre les deux serveurs WebRTC 102 et 108 permettant une communication bidirectionnelle entre ces deux serveurs (illustrée par l'envoi F70 d'un message 101 Switching Protocol contenant un identifiant WebSocketIdCN102 de la session WebSocket sur le cœur de réseau CN102, relayé en F80 par le serveur d'interconnexion 109 jusqu'au serveur WebRTC 102 après avoir remplacé l'identifiant WebSocketIdCN102 par un identifiant WebSocketIdCN101 de la session WebSocket sur le cœur de réseau CN101).

On suppose maintenant que le dispositif T101 de l'utilisateur U101 souhaite envoyer une requête d'établissement d'une session de communication avec un dispositif de l'utilisateur U102. A cet effet, le dispositif T101 s'est préalablement enregistré et authentifié auprès du serveur WebRTC 102, de façon connue en soi, par exemple en utilisant le protocole http ou https, et a établi une session de communication avec le serveur WebRTC 102 en utilisant le protocole WebSocket par exemple.

Le dispositif T101 par l'intermédiaire de son client WebRTC T101-1 envoie, via le serveur WebRTC 102, une requête WebSocket R100, d'établissement d'une communication WebRTC destinée à un dispositif de l'utilisateur U102 utilisant l'identité publique IMPU2 (étape F90). Cette requête R100 contient notamment un identifiant de session WebSocketIdT101 et l'identité publique IMPU2 destinataire de la requête ainsi que les codecs supportés via le protocole SDP (Session Description Protocol).

Sur réception de la requête R100, le serveur WebRTC 102 vérifie si l'identité publique IMPU2 à laquelle est destinée la requête correspond au même nom de domaine que celui associé au cœur de réseau CN101 (étape F100). Autrement dit, il vérifie si l'identité publique IMPU2 est connue du cœur de réseau CN101. Pour cela, il interroge sa base de données 105.

Dans l'exemple envisagé ici, l'identité publique IMPU2 est contenue dans la base de données 105, autrement dit, elle est connue du cœur de réseau CN101.

Conformément à l'invention, le serveur WebRTC 102 duplique donc la requête R100 reçue du dispositif T101 en une première requête R101 et en une deuxième requête R102 (étape F110).

Puis il déclenche simultanément ici :

— le routage de la première requête R101 au sein du cœur de réseau CN101 vers le dispositif T102 (étape F120) ; et

— le routage de la deuxième requête R102 vers le serveur d'interconnexion 109 selon la route préétablie par défaut au cours des étapes F10-F80, en précisant dans la deuxième requête R102 comme URI destinataire de celle-ci, l'URI composée de l'identité publique IMPU2 et du nom de domaine nomdomCN102 correspondant au cœur de réseau CN102 (étape F130). La requête R102 comprend en outre, à la place de l'identifiant WebSocketIdT101, l'identifiant WebSocketIdCN101 de la session WebSocket établie sur le cœur de réseau CN101 et correspondant à la route préétablie lors des étapes F10-F80 et assurant l'interconnexion avec le cœur de réseau CN102.

Dans l'exemple envisagé à la figure 5, par souci de simplification, on suppose que le dispositif T102 dispose bien d'une session WebSocket établie avec le serveur WebRTC 102 (il est « enregistré » et authentifié auprès de celui-ci), mais que l'utilisateur U102 a fermé la fenêtre de son client WebRTC T102-1 de sorte que bien que le routage de la requête vers le dispositif T102 via le cœur de réseau CN101 soit déclenché par le serveur WebRTC 102, en pratique la première requête R101 n'est pas notifiée au dispositif T102 par le serveur WebRTC 102 via le cœur de réseau CN101 (d'où la représentation en traits discontinus du routage F120 de la requête R101 vers le dispositif T102).

La deuxième requête R102 est quant à elle relayée par le serveur d'interconnexion 109 jusqu'au serveur WebRTC 108 du cœur de réseau CN102 (étape F140).

Sur réception de cette requête R102, le serveur WebRTC 108 vérifie qu'un accord d'interconnexion existe entre les deux cœurs de réseau, et que le client WebRTC T102-2 du dispositif 102 associé au cœur de réseau CN102 peut bien être contacté par un client WebRTC associé au cœur de réseau CN101 (étape F150). A cet effet il peut consulter notamment sa base de données 106 pour voir si un tel accord existe.

Le cas échéant, le serveur WebRTC 108 relaye la requête R102 vers le client WebRTC T102-2 du dispositif 102 associé au cœur de réseau CN102 (étape F160). La requête R102 est notifiée par le client WebRTC T102-2 à l'utilisateur U102. Il s'ensuit l'envoi d'un message de réponse provisoire à la requête R102 par le client WebRTC T102-2 relatant la notification en cours (étape F170). Le message de réponse provisoire emprunte le chemin inverse de celui de la requête R102 (étapes F170, F180, F190) jusqu'au serveur WebRTC 102. Le serveur WebRTC 102 transmet à son tour le message de réponse provisoire au client T101-1 du dispositif T101 (étape F200).

On suppose maintenant que la requête d'établissement d'une session avec le client WebRTC T101-1 est acceptée par le client WebRTC T102-2. Celui-ci envoie un message de réponse finale en réponse à la requête R102 à destination du client WebRTC T101-1 (étape F210). Le message de réponse finale emprunte le chemin inverse de celui de la requête R102 (étapes F210, F220, F230) jusqu'au serveur WebRTC 102. Le serveur WebRTC 102 transmet à son tour le message de réponse finale au client T101-1 du dispositif T101 (étape F240). Le client T101-1 acquitte le message de réponse finale (étapes F250-F280).

Une communication bidirectionnelle est alors établie entre les deux clients WebRTC T101-1 et T102-2 permettant l'échange de flux media entre les deux clients (étape F290).

On note que dans ce deuxième mode de réalisation, les cœurs de réseau CN101 et CN102 sont dotés d'un unique serveur WebRTC en charge des différents utilisateurs connus de ces cœurs de réseau. En variante, on peut envisager plusieurs serveurs WebRTC au sein d'un même cœur de réseau et notamment le cas de figure où le serveur WebRTC gérant le client WebRTC 102-1 n'est pas le même que celui gérant le client WebRTC 101-1. Dans ce cas de figure, la réplique R101 est routée vers le serveur WebRTC gérant le client WebRTC 102-1 lors du déclenchement du routage de cette réplique.

Par ailleurs, le premier et le deuxième mode de réalisation ont été décrits dans un contexte où deux cœurs de réseau sont considérés et dans lequel ces deux cœurs de réseau sont des cœurs de réseau IP multimédia. Comme mentionné précédemment, ces hypothèses ne sont pas limitatives en soi : d'une part, l'invention peut s'appliquer à plus de deux cœurs de réseau (i.e. une interconnexion du cœur de réseau appelant CN1 avec N cœurs de réseau, N>1 peut être envisagée, auquel cas conformément à l'invention N+1 répliques de la requête sont générées et routées au sein du cœur de réseau CN1 et vers les entités d'interconnexion avec les N cœurs de réseau) ; d'autre part, l'un au moins de ces cœurs de réseau peut implémenter une autre technologie qu'une technologie IP multimédia et notamment une technologie circuit. Ce cœur de réseau en mode circuit peut être le cœur de réseau appelé à proprement parler ou un cœur de réseau en mode circuit de transit entre le cœur de réseau IP multimédia CN1 et un autre cœur de réseau IP multimédia.

**Revendications**

1. Procédé de traitement d'une requête (R,R100) émise par un premier dispositif (T1,T101) enregistré auprès d'un premier cœur de réseau IP multimédia (CN1,CN101) à destination d'une identité publique allouée à au moins un deuxième dispositif (T2-1,T2-2,T2-3,T102-1,T102-2) et connue du premier cœur de réseau IP multimédia, ledit procédé étant destiné à être mis en œuvre par un serveur (2,102) du premier cœur de réseau IP multimédia et comprenant :

   ◦ une étape de réplication (E50, F110) de ladite requête en une première requête (R1,R101) et en au moins une deuxième requête (R2,R102) ;
   ◦ une étape de déclenchement (E60,F120) d'un routage de la première requête au sein du premier cœur de réseau IP multimédia,

   ledit procédé étant **caractérisé en ce qu'**il comporte en outre :

   ◦ une étape de déclenchement (E80,F130) d'un routage de ladite au moins une deuxième requête selon au moins une route prédéterminée à destination d'au moins une entité d'interconnexion (9,109) du premier cœur de réseau IP multimédia avec au moins un deuxième cœur de réseau distinct du premier cœur de réseau IP multimédia.

2. Procédé de traitement selon la revendication 1 dans lequel ledit au moins un deuxième cœur de réseau est un cœur de réseau IP multimédia.

3. Procédé de traitement selon la revendication 1 ou 2 comprenant en outre :

   — une étape de réception (E70, E90, F190, F230) d'au moins une réponse en provenance d'au moins un dit deuxième dispositif ;
   — une étape de transmission (E110,F200, F240) vers le premier dispositif d'au moins une réponse à ladite requête élaborée (E100) à partir d'au moins une dite réponse reçue en fonction d'un type de ladite au moins une réponse reçue.

**4.** Procédé de traitement selon la revendication 3 dans lequel ladite au moins une réponse reçue lors de l'étape de réception comprend au moins une réponse reçue via un dit deuxième cœur de réseau.

**5.** Procédé de traitement selon la revendication 3 ou 4 dans lequel ladite au moins une réponse élaborée comprend :

 — toutes les réponses reçues lors de ladite étape de réception ; ou
 — la réponse reçue en premier lors de ladite étape de réception ; ou
 — la meilleure réponse reçue au regard d'un critère prédéfini parmi des réponses reçues lors de ladite étape de réception au cours d'une première période de temps prédéterminée ;
 — une agrégation de contenus extraits des réponses reçues lors de ladite étape de réception au cours d'une deuxième période de temps prédéterminée.

**6.** Procédé de traitement selon l'une quelconque des revendications 3 à 5 dans lequel ladite au moins une réponse est élaborée en fonction en outre d'un type de la requête émise par le premier dispositif.

**7.** Procédé de traitement selon l'une quelconque des revendications 1 à 6 dans lequel l'étape de réplication et les étapes de déclenchement des routages sont mises en œuvre après vérification que ces étapes sont autorisées pour le premier dispositif et/ou pour ledit au moins un deuxième dispositif.

**8.** Procédé de traitement selon l'une quelconque des revendications 1 à 7 dans lequel l'étape de déclenchement du routage de la première requête et l'étape de déclenchement du routage de ladite au moins une deuxième requête sont mises en œuvre simultanément.

**9.** Procédé de traitement selon l'une quelconque des revendications 1 à 8 dans lequel l'identité publique allouée au deuxième dispositif est contenue dans une base de données du premier cœur de réseau IP multimédia.

**10.** Procédé de traitement selon l'une quelconque des revendications 1 à 8 dans lequel le premier cœur de réseau IP multimédia met en œuvre le protocole SIP, Session Initiation Protocol, le procédé comprenant en outre :

 — une étape de dérivation d'un nom de domaine à partir de l'identité publique ; et
 — une étape d'interrogation d'un serveur DNS,

Domain Name Server, en utilisant le nom de domaine dérivé ;

l'identité publique étant considérée comme connue du premier cœur de réseau IP multimédia si un identifiant SIP est reçu du serveur DNS en réponse à son interrogation.

**11.** Procédé de traitement selon l'une quelconque des revendications 1 à 10 dans lequel :

 — le premier cœur de réseau IP multimédia met en œuvre le protocole SIP et l'étape de déclenchement du routage de ladite au moins une deuxième requête n'est activée que si l'interconnexion entre le premier cœur de réseau IP multimédia et ledit au moins un deuxième cœur de réseau est réalisée en utilisant le protocole SIP ; ou
 — le premier cœur de réseau IP multimédia met en œuvre au moins un protocole web et l'étape de déclenchement du routage de ladite au moins une deuxième requête n'est activée que si l'interconnexion entre le premier cœur de réseau IP multimédia et ledit au moins un deuxième cœur de réseau est réalisée en utilisant ledit au moins un protocole web.

**12.** Procédé de traitement selon l'une quelconque des revendications 1 à 8 ou 10 dans lequel :

 — le premier cœur de réseau IP multimédia implémente une architecture IMS, IP Multimedia Subsystem, et les étapes de vérification, de réplication et de déclenchement des routages sont mises en œuvre par un serveur S-CSCF ou par un serveur d'application du premier cœur de réseau IP multimédia ; ou
 — le premier cœur de réseau IP multimédia implémente une architecture WebRTC, Web Real Time Communication, et les étapes de réplication et de déclenchement des routages sont mises en œuvre par un serveur WebRTC du premier cœur de réseau IP multimédia.

**13.** Support d'enregistrement lisible par un ordinateur sur lequel est enregistré un programme d'ordinateur comportant des instructions qui, lorsqu'elles sont exécutées par un ordinateur, conduisent celles-ci à mettre en œuvre les étapes du procédé de traitement selon l'une quelconque des revendications 1 à 12.

**14.** Serveur (2,102) apte à traiter une requête émise par un premier dispositif enregistré auprès d'un premier cœur de réseau IP multimédia à destination d'une identité publique allouée à au moins un deuxième dispositif et connue du premier cœur de réseau IP multimédia, ledit serveur comprenant :

∘ un module de réplication (2B), configuré pour répliquer ladite requête en une première requête et en au moins une deuxième requête ;

∘ un premier module de routage (2C), configuré pour déclencher un routage de la première requête au sein du premier cœur de réseau IP multimédia ;

ledit serveur étant **caractérisé en ce qu'**il comporte en outre :

∘ un deuxième module de routage (2D), configuré pour déclencher un routage de ladite au moins une deuxième requête selon une route prédéterminée à destination d'une entité d'interconnexion du premier cœur de réseau IP multimédia avec au moins un deuxième cœur de réseau distinct du premier cœur de réseau IP multimédia.

**15.** Système de communication (1,101) comprenant :

— un premier dispositif (T1,T101) enregistré auprès d'un premier cœur de réseau IP multimédia, apte à émettre une requête à destination d'une identité publique allouée à au moins un second dispositif ; et

— un serveur (2,102) du premier cœur de réseau IP multimédia conforme à la revendication 14 et gérant le premier dispositif.

**Patentansprüche**

**1.** Verfahren zur Verarbeitung einer Anforderung (R, R100), ausgegeben von einer ersten Vorrichtung (T1, T101), die in einem ersten Multimedia-IP-Netzwerkkern (CN1, CN101) registriert ist, an eine öffentliche Identität, die mindestens einer zweiten Vorrichtung (T2-1, T2-2, T2-3, T102-1, T102-2) zugeordnet ist und dem ersten Multimedia-IP-Netzwerkkern bekannt ist, wobei das Verfahren dazu vorgesehen ist, von einem Server (2, 102) des ersten Multimedia-IP-Netzwerkkerns umgesetzt zu werden, und umfasst:

o einen Schritt der Replikation (E50, F110) der Anforderung in eine erste Anforderung (R1, R101) und in mindestens eine zweite Anforderung (R2, R102);

o einen Schritt der Auslösung (E60, F120) einer Weiterleitung der ersten Anforderung innerhalb des ersten Multimedia-IP-Netzwerkkerns, **gekennzeichnet durch**

o einen Schritt der Auslösung (E80, F130) einer Weiterleitung der mindestens einen zweiten Anforderung gemäß mindestens einem vorbestimmten Leitweg an mindestens eine Verbindungseinheit (9, 109) des ersten Multimedia-IP-Netzwerkkerns mit mindestens einem zweiten Multimedia-IP-Netzwerkkern, der vom ersten Multimedia-IP-Netzwerkkern verschieden ist.

**2.** Verfahren zur Verarbeitung nach Anspruch 1, wobei der mindestens eine zweite Netzwerkkern ein Multimedia-IP-Netzwerkkern ist.

**3.** Verfahren zur Verarbeitung nach Anspruch 1 oder 2, außerdem umfassend:

- einen Schritt des Empfangs (E70, E90, F190, F230) mindestens einer Antwort von mindestens einer zweiten Vorrichtung;
- einen Schritt der Übermittelung (E110, F200, F240) mindestens einer Antwort an die erste Vorrichtung auf die erstellte Anforderung (E100) anhand mindestens einer Antwort, die in Abhängigkeit von einer Art der mindestens einen empfangenen Antwort empfangen wird.

**4.** Verfahren zur Verarbeitung nach Anspruch 3, wobei die mindestens eine im Schritt des Empfangs empfangene Antwort mindestens eine Antwort umfasst, die über einen zweiten Netzwerkkern empfangen wird.

**5.** Verfahren zur Verarbeitung nach Anspruch 3 oder 4, wobei die mindestens eine erstellte Antwort umfasst:

- alle im Empfangsschritt empfangenen Antworten; oder
- die im Empfangsschritt als Erste empfangene Antwort; oder
- die beste empfangene Antwort in Bezug auf ein vorgegebenes Kriterium aus den im Empfangsschritt empfangenen Antworten im Verlauf eines ersten vorbestimmten Zeitraums;
- eine Zusammenstellung von Inhalten, die aus den im Empfangsschritt empfangenen Antworten im Verlauf eines zweiten vorgegebenen Zeitraums extrahiert werden.

**6.** Verfahren zur Verarbeitung nach einem der Ansprüche 3 bis 5, wobei die mindestens eine Antwort ferner in Abhängigkeit von einer Art der von der ersten Vorrichtung ausgegebenen Anforderung erstellt wird.

**7.** Verfahren zur Verarbeitung nach einem der Ansprüche 1 bis 6, wobei der Schritt der Replikation und die Schritte der Auslösung der Weiterleitungen nach einer Überprüfung umgesetzt werden, dass diese Schritte für die erste Vorrichtung und/oder für die mindestens eine zweite Vorrichtung autorisiert sind.

**8.** Verfahren zur Verarbeitung nach einem der Ansprüche 1 bis 7, wobei der Schritt der Auslösung der Weiterleitung der ersten Anforderung und der Schritt der Auslösung der Weiterleitung der mindestens einen zweiten Anforderung gleichzeitig umgesetzt werden.

9. Verfahren zur Verarbeitung nach einem der Ansprüche 1 bis 8, wobei die öffentliche Identität, die der zweiten Vorrichtung zugeordnet ist, in einer Datenbank des ersten Multimedia-IP-Netzwerkkerns enthalten ist.

10. Verfahren zur Verarbeitung nach einem der Ansprüche 1 bis 8, wobei der erste Multimedia-IP-Netzwerkkern das Protokoll SIP, Session Initiation Protocol, so umsetzt, dass es außerdem umfasst:

- einen Schritt der Umleitung eines Domainnamens anhand der öffentlichen Identität; und
- einen Schritt der Abfrage eines DNS-Servers, Domain Name Servers, unter Verwendung der umgeleiteten Domain;

wobei die öffentliche Identität als dem ersten Multimedia-IP-Netzwerkkern bekannt gilt, wenn eine SIP-Kennung vom DNS-Server als Antwort auf seine Abfrage empfangen wird.

11. Verfahren zur Verarbeitung nach einem der Ansprüche 1 bis 10, wobei:

- der erste Multimedia-IP-Netzwerkkern das SIP-Protokoll umsetzt und der Schritt der Auslösung der Weiterleitung der mindestens einen zweiten Anforderung nur aktiviert wird, wenn die Verbindung zwischen dem ersten Multimedia-IP-Netzwerkkern und dem mindestens einen zweiten Netzwerkkern unter Verwendung des SIP-Protokolls realisiert wird; oder
- der erste Multimedia-IP-Netzwerkkern mindestens ein Web-Protokoll umsetzt und der Schritt der Auslösung der Weiterleitung der mindestens einen zweiten Anforderung nur aktiviert wird, wenn die Verbindung zwischen dem ersten Multimedia-IP-Netzwerkkern und dem mindestens einen zweiten Netzwerkkern unter Verwendung des mindestens einen Web-Protokolls realisiert wird.

12. Verfahren zur Verarbeitung nach einem der Ansprüche 1 bis 8 oder 10, wobei:

- der erste Multimedia-IP-Netzwerkkern eine Architektur eines IMS, IP Multimedia Subsystem, implementiert und die Schritte der Überprüfung, der Replikation und der Auslösung der Weiterleitungen durch einen S-CSCF-Server oder durch einen Anwendungsserver des ersten Multimedia-IP-Netzwerkkerns umgesetzt werden; oder
- der erste Multimedia-IP-Netzwerkkern eine Architektur einer WebRTC, Web Real-Time Communication, implementiert und die Schritte der Replikation und der Auslösung der Weiterleitungen durch einen WebRTC-Server des ersten Multimedia-IP-Netzwerkkerns umgesetzt werden.

13. Computerlesbares Speichermedium, auf dem ein Computerprogramm gespeichert ist, das Anweisungen zur Ausführung der Schritte des Verfahrens zur Verarbeitung nach einem der Ansprüche 1 bis 12 enthält, wenn diese ausgeführt werden.

14. Server (2, 102), der dazu geeignet ist, eine Anforderung zu verarbeiten, ausgegeben von einer ersten Vorrichtung, die in einem ersten Multimedia-IP-Netzwerkkern registriert ist, an eine öffentliche Identität, die mindestens einer zweiten Vorrichtung zugeordnet ist und dem ersten Multimedia-IP-Netzwerkkern bekannt ist, wobei der Server umfasst:

o ein Replikationsmodul (2B), das dazu konfiguriert ist, die Anforderung in eine erste Anforderung und in mindestens eine zweite Anforderung zu replizieren;
o ein erstes Weiterleitungsmodul (2C), das dazu konfiguriert ist, eine Weiterleitung der ersten Anforderung innerhalb des ersten Multimedia-IP-Netzwerkkerns auszulösen; und **gekennzeichnet durch**
o ein zweites Weiterleitungsmodul (2D), das dazu konfiguriert ist, eine Weiterleitung der mindestens einen zweiten Anforderung gemäß mindestens einem vorbestimmten Leitweg an mindestens eine Verbindungseinheit des ersten Multimedia-IP-Netzwerkkerns mit mindestens einem zweiten Multimedia-IP-Netzwerkkern, der vom ersten Multimedia-IP-Netzwerkkern verschieden ist, auszulösen.

15. Kommunikationssystem (1, 101), umfassend:

- eine erste Vorrichtung (T1, T101), die bei einem ersten Multimedia-IP-Netzwerkkern registriert und geeignet, ist eine Anforderung an eine öffentliche Identität, die mindestens einer zweiten Vorrichtung zugeordnet ist, auszugeben; und
- einen Server (2, 102) des ersten Multimedia-IP-Netzwerkkerns, der Anspruch 14 entspricht und die erste Vorrichtung verwaltet.

## Claims

1. Method for processing a request (R, R100) sent by a first device (T1, T101) registered with a first multimedia IP core network (CN1, CN101) to a public identity allocated to at least one second device (T2-1, T2-2, T2-3, T102-1, T102-2) and known to the first multimedia IP core network, said method being intended to be implemented by a server (2,102) of the first multimedia IP core network and comprising:

   o a step (E50, F110) of replicating said request in a first request (R1, R101) and in at least one second request (R2, R102);
   o a step (E60, F120) of triggering a routing of the first request within the first multimedia IP core network, **characterized by**
   o a step (E80, F130) of triggering a routing of said at least one second request along at least one predetermined route to at least one entity (9, 109) for interconnecting the first multimedia IP core network to at least one second core network distinct from the first multimedia IP core network.

2. Processing method according to Claim 1, wherein said at least one second core network is a multimedia IP core network.

3. Processing method according to Claim 1 or 2, further comprising:

   - a step (E70, E90, F190, F230) of receiving at least one response from at least one said second device;
   - a step (E110, F200, F240) of transmitting, to the first device, at least one response to said request developed (E100) on the basis of at least one said response received according to a type of said at least one response received.

4. Processing method according to Claim 3, wherein said at least one response received in the receiving step comprises at least one response received via a said second core network.

5. Processing method according to Claim 3 or 4, wherein said at least one response developed comprises:

   - all of the responses received in said receiving step; or
   - the response received first in said receiving step; or
   - the best response received with regard to a predefined criterion among the responses received in said receiving step over a first predetermined period of time;
   - an aggregation of contents extracted from the responses received in said receiving step over a second predetermined period of time.

6. Processing method according to any one of Claims 3 to 5, wherein said at least one response is furthermore developed according to a type of the request sent by the first device.

7. Processing method according to any one of Claims 1 to 6, wherein the replicating step and the steps of triggering the routings are implemented after checking that these steps are authorized for the first device and/or for said at least one second device.

8. Processing method according to any one of Claims 1 to 7, wherein the step of triggering the routing of the first request and the step of triggering the routing of said at least one second request are implemented simultaneously.

9. Processing method according to any one of Claims 1 to 8, wherein the public identity allocated to the second device is contained in a database of the first multimedia IP core network.

10. Processing method according to any one of Claims 1 to 8, wherein the first multimedia IP core network implements the SIP protocol (Session Initiation Protocol) and such that it further comprises:

    - a step of deriving a domain name from the public identity; and
    - a step of interrogating a DNS server (Domain Name Server) using the derived domain name;

    the public identity being considered to be known to the first multimedia IP core network if a SIP identifier is received from the DNS server in response to its interrogation.

11. Processing method according to any one of Claims 1 to 10, wherein:

    - the first multimedia IP core network implements the SIP protocol and the step of triggering the routing of said at least one second request is activated only if the interconnection between the first multimedia IP core network and said at least one second core network is made using the SIP protocol; or
    - the first multimedia IP core network implements at least one web protocol and the step of triggering the routing of said at least one second request is activated only if the interconnection between the first multimedia IP core network and said at least one second core network is made using said at least one web protocol.

**12.** Processing method according to any one of Claims 1 to 8 or 10, wherein:

- the first multimedia IP core network implements an IMS, IP Multimedia Subsystem, architecture and the steps of checking, of replicating and of triggering the routings are implemented by an S-CSCF server or by an application server of the first multimedia IP core network; or
- the first multimedia IP core network implements a WebRTC, Web Real-Time Communication, architecture, and the steps of replicating and of triggering the routings are implemented by a WebRTC server of the first multimedia IP core network.

**13.** Computer-readable storage medium on which a computer program comprising instructions for executing the steps of the processing method according to any one of Claims 1 to 12 is stored, when the latter are executed.

**14.** Server (2, 102) able to process a request sent by a first device registered with a first multimedia IP core network to a public identity allocated to at least one second device and known to the first multimedia IP core network, said server comprising:

o a replicating module (2B), configured to replicate said request in a first request and in at least one second request;
o a first routing module (2C), configured to trigger a routing of the first request within the first multimedia IP core network;

said server being **characterized in that** it further comprises:

o a second routing module (2D), configured to trigger a routing of said at least one second request along a predetermined route to an entity for interconnecting the first multimedia IP core network to at least one second core network distinct from the first multimedia IP core network.

**15.** Communication system (1, 101) comprising:

- a first device (T1, T101) registered with a first multimedia IP core network, able to send a request to a public identity allocated to at least one second device; and
- a server (2, 102) of the first multimedia IP core network in accordance with Claim 14 and managing the first device.

FIG.1

FIG.2

FIG.3

FIG.4

EP 3 646 554 B1

EP 3 646 554 B1

| T101-1 | 102 | T102-1 | 109 | 108 | T102-2 |
|---|---|---|---|---|---|

F10/http POST login

F20/http POST login

F40/200OK(SessionIdCN101)

F30/200OK (SessionIdCN102)

F50/http POST CreateWebSocket (SessionIdCN101)

F60/http POST CreateWebSocket (SessionIdCN102)

F80/101 Switching Protocol (WebSocketIdCN101)

F70/101 Switching Protocol (WebSocketIdCN102)

F90/R100 = WebSocket (WebSocketIdT101,Setup, To=IMPU2)

F100

F110

F120/R101

F130/R102 = WebSocket (WebSocketIdCN101,Setup, To=IMPU2@nomdomCN102)

F140/R102 = WebSocket (WebSocketId CN102,Setup,To=IMPU2@nomdomCN102)

F150

F160/R102

F170

F180

F190

F200

F210

F220

F230

F240

F250

F260

F270

F280

F290

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20160156783 A1

**Littérature non-brevet citée dans la description**

- SIP: Session Initiation Protocol. Juin 2002